# EUROPÄISCHE PATENTSCHRIFT

(11) **EP 0 725 003 B1**
(45) Veröffentlichungstag und Bekanntmachung des Hinweises auf die Patenterteilung: **01.09.1999**
(21) Anmeldenummer: 96101423.0
(22) Anmeldetag: 01.02.1996
(51) Int. Cl.: B62H 5/00

(54) **Fahrzeug, insbesondere Zweirad-Fahrzeug, mit zugeordnetem Kabelschloss**
Vehicle, especially two-wheeled vehicle with associated cable lock
Véhicule, en particulier véhicule à deux roues avec serrure de câble associée

(30) Priorität: 03.02.1995 DE 19503573
(43) Veröffentlichungstag der Anmeldung: 07.08.1996
(73) Patentinhaber: Aug. Winkhaus GmbH & Co. KG, D-48291 Telgte (DE)
(72) Erfinder: Kortenbrede, Ludger, D-48291 Telgte (DE)
(74) Vertreter: Weickmann, Heinrich, Dipl.-Ing.

(56) Entgegenhaltungen:
- EP-A- 0 476 260
- WO-A-94/25330
- DE-C- 876 220
- US-A- 4 970 883
- US-A- 5 289 704

## Beschreibung

Die Erfindung betrifft ein Fahrzeug, insbesondere Zweirad-Fahrzeug, mit einem zugeordneten Kabelschloß,
wobei dieses Kabelschloß ein Schließkabel und in einem Endbereich des Schließkabels eine auf ein Schließgeheimnis reagierende Kupplungseinheit aufweist, welche der Bildung einer Kabelschlinge dient,
wobei weiter das Schließkabel mit seinem der Kupplungseinheit fernen Ende vorauslaufend in einen Kabelführungskanal am Fahrzeugrahmen einsenkbar ist
und wobei die Kupplungseinheit bei in den Kabelführungskanal wenigstens teilweise eingesenktem Schließkabel mit Kupplungseinheitsicherungsmitteln am Fahrzeugrahmen in Sicherungseingriff bringbar ist in der Weise, daß am Fahrzeugrahmen Kupplungseinheitführungsmittel für die Kupplungseinheit vorgesehen sind, in welche die Kupplungseinheit im Zuge der Einführung des Schließkabels in den Kabelführungskanal eintreten kann, und daß die Kupplungseinheitsicherungsmittel im Bereich dieser Kupplungseinheitführungsmittel angebracht sind.

Aus der EP 476 260 A1 ist ein Fahrzeug mit einem in Mitführstellung gehalterten Kabelschloß (vgl. dort insbesondere Fig. 7) bekannt. Wenn das Schließkabel dort in den Kabelführungskanal bis zum Anschlag an dessen Boden eingesenkt wird, steht immer noch ein Teil des Schließkabels über das bodenferne Ende des Kabelführungskanals über, so daß die an diesem überstehenden Ende angebrachte Kupplungseinheit an einem Beschlag des Fahrradrahmens durch eine Bewegung quer zur Achse des Kabelführungskanals in Eingriff gebracht werden kann. Diese Sicherungsmöglichkeit für das Schließkabel ist vorteilhaft, weil dann während der Fahrt das Schließkabel am Fahrradrahmen weitestgehend unbeweglich festgelegt ist und ein unbefugtes Entnehmen des Schließkabels erschwert ist. Weniger vorteilhaft ist bei der bekannten Lösung, daß man zum Sichern der Kupplungseinheit an dem Fahrzeugrahmen eine bestimmte Stellung der Kupplungseinheit gegenüber dem am Fahrzeugrahmen angebrachten Beschlag suchen muß, um von dieser aus die Sicherung der Kupplungseinheit an diesem Beschlag ausführen zu können.

Aus der US-A 4 970 883 ist eine Zweirad-Kabelschloßkombination der eingangs bezeichneten Art bekannt. Das Schließkabel wird dabei mit seinem der Kupplungseinheit fernen Ende vorauslaufend in einen Kabelführungskanal einer am Fahrzeugrahmen angebauten, als Kabelführungsrohr ausgebildeten Lenkstange eingeführt, wobei die Kupplungseinheitführungsmittel im Bereich eines Handgriffendes dieser Lenkstange angebaut sind und die Kupplungseinheitsicherungsmittel ebenfalls diesem Handgriffende der Lenkstange zugeordnet sind. Die Kupplungseinheitsicherungsmittel beruhen dabei auf Reibschluß: Beim Einführen der Kupplungseinheit in den Kabelführungskanal greifen, kurz bevor die Kupplungseinheit ihre endgültige Stellung in dem Kabelführungskanal nahe dem Lenkstangenhandgriff erreicht, radial aus der Kupplungseinheit hervorstehende Klemmkugeln an der Innenumfangsfläche des Kabelführungskanals an und sichern damit die Kupplungseinheit reibschlüssig gegenüber der Lenkstange in ihrer Endposition. Zur Vorbereitung eines erleichterten Herausziehens der Kupplungseinheit und des Schließkabels aus dem Kabelführungskanal wird ein in der gesicherten Stellung der Kupplungseinheit innerhalb des Kabelführungskanals noch zugänglicher Drücker betätigt, um eine Lösebewegung der Klemmkugeln zu ermöglichen. Dann kann die Kupplungseinheit und mit ihr das Schließkabel leicht aus dem Kabelführungskanal der Lenkstange herausgezogen werden. Die Kupplungseinheit, die in diesem Fall als Zifferneinstellwerk ausgeführt ist, kann dann zur Bildung einer das Fahrzeug sichernden Kabelschlinge benutzt und abgesperrt werden, so daß sie nur bei Kenntnis des Schließgeheimnisses wieder gelöst werden kann.

Bei dieser bekannten Ausführungsform kann das Kabelschloß bei nicht gesichertem Fahrzeug leicht aus der Lenkstange gelöst und von dem Fahrzeug getrennt werden. Es besteht deshalb die Gefahr, daß Unbefugte das Kabelschloß von einem kurzfristig unbeachteten und nicht gesicherten oder anderweitig nur unzureichend gesicherten Fahrzeug entfernen, beispielsweise um dem Fahrradbesitzer eine spätere effektivere Sicherung mittels des Kabelschlosses unmöglich zu machen und dann eine Entwendungsabsicht realisieren zu können. Auch besteht die Gefahr, daß etwa spielende Kinder das Kabelschloß, wenn es in einem anderweitig gesicherten häuslichen Bereich am Fahrzeug eine Verstau- bzw. Mitführstellung einnimmt, entfernen, ohne daß es der rechtmäßige Benutzer rechtzeitig bemerkt und bei später bestehender Sicherungsabsicht außerhalb des häuslichen Bereichs feststellen muß, daß ihm das Kabelschloß zur effektiveren Sicherung nicht zur Verfügung steht.

Aus der DE-PS 876 220 ist es bekannt, ein Schließkabel ebenfalls in einen Kabelführungskanal des Fahrzeugrahmens einzuführn, wobei der Kabelführungskanal in einem Rahmenrohrstück des Fahrzeugsrahmens selbst untergebracht sein kann. Nach Einsenken des Schließkabels in den Kabelführungskanal bleibt außerhalb des Kabelführungskanals ein Gegenkupplungsstück, welches an dem Ausgang des Kabelführungskanals schräg zur Achse des Kabelführungskanals anliegt. Beim Ausziehen des Schließkabels aus dem Kabelführungskanal gegen die Wirkung einer Rückzugfeder legt sich eine Verankerungskugel am inneren Ende des Schließkabels gegen den Ausgang des Kabelführungskanals an; somit kann das Schließkabel nicht weiter ausgezogen werden. Das am äußeren Ende des Schließkabels angebrachte Gegenkupplungsstück kann dann in eine an dem Rahmen des Fahrzeugs fest angebrachte Kupplungseinheit eingekuppelt werden.

Bei dieser Ausführungsform ist zwar ein vollständiges unbefugtes Abnehmen des Kabelschlosses vom Fahrzeug durch das Zusammenwirken der Verankerungskugel mit dem Ausgang des Kabelführungskanals unterbunden. Indes sind bei dieser bekannten Ausführungsform wesentliche Funktionsteile, nämlich das Gegenkupplungsstück am äußeren Ende des Schließkabels und das Schließkabel selbst dem Zugriff von Unbefugten offen, so daß dieser wiederum in der Absicht, zu einem späteren Zeitpunkt das Fahrzeug unbefugt zu entwenden, Manipulationen am Gegenkupplungsstück oder am Schließkabel vornehmen kann. Auch muß mit einer Beeinträchtigung des Erscheinungsbildes des Fahrzeugs durch das in der Lage undefinierte Vorstehen des Gegenkupplungsstücks aus dem Kabelführungskanal gerechnet werden.

Der Erfindung liegt die Aufgabe zugrunde, bei einem Fahrzeug der eingangs bezeichneten Art eine Verstau- und Sicherungsmöglichkeit für das Kabelschloß am Fahrzeug zu schaffen, die ein unbefugtes Entfernen und einen Zugriff zu bestimmten Funktionsteilen des Kabelschlosses für Unbefugte erschwert.

Zur Lösung dieser Aufgabe wird erfindungsgemäß vorgeschlagen, daß die Kupplungseinheit aus dem Sicherungseingriff mit den Kupplungseinheitsicherungsmitteln bei Anwendung des Schließgeheimnisses lösbar ist. Anwendung des Schließgeheimnisses bedeutet dabei beispielsweise, daß der Sicherungseingriff durch Stecken eines Schlüssels gelöst werden kann oder daß der Sicherungseingriff durch Einstellen eines Ziffernschließwerks gelöst werden kann.

Bei der erfindungsgemäßen Ausführungsform erzielt man eine ergonomisch günstige Positionierung des Kabelschlosses am Fahrzeug durch den Benutzer in Verbindung mit erhöhter Sicherheit gegen unbefugte Entnahme des Kabelschlosses und unbefugte Einwirkung auf wesentliche Funktionsteile des Kabelschlosses. Die der erhöhten Sicherheit gegen unbefugtes Entnehmen und unbefugte Einwirkung auf funktionswesentliche Teile des Kabelschosses dienende Maßnahme der Anwendung eines Schließgeheimnisses als Vorbereitung der Entnahme wirkt sich nicht erschwerend auf die Handhabung des Systems aus, weil die Kupplungseinheitsicherungsmittel im Bereich der Kupplungseinheitführungsmittel angebracht sind, so daß dort jederzeit - auch bei Dunkelheit - das Schließgeheimnis leicht eingegeben werden kann.

Für die Herstellung des Sicherungseingriffs ist es denkbar, daß die Kupplungseinheit an den Kupplungseinheitsicherungsmitteln unter Anwendung des Schließgeheimnisses sicherbar ist. Es ist aber auch denkbar, daß die Kupplungseinheit an den Kupplungseinheitsicherungsmitteln durch Schnappeingriff sicherbar ist, wenn die Kupplungseinheit beim Einführen in die Kupplungseinheitführungsmittel eine vorbestimmte Stellung gegenüber den Kupplungseinheitführungsmitteln erreicht.

Die Kupplungseinheit kann in Weiterbildung der erfindungsgemäßen Lösung ein sie in dem Kupplungseinheitführungsmittel durch Eingriff mit den Kupplungseinheitsicherungsmitteln sicherndes Riegelelement aufweisen, welches im wesentlichen orthogonal zu einer durch die Kupplungseinheitführungsmittel bestimmten Führungsachse relativ zu der Kupplungseinheit beweglich ist. Bei dieser Ausführungsform ist sichergestellt, daß das Riegelelement beim Einsenken des Schließkabels in den Führungskanal zwangsläufig in den Bereich der Kupplungseinheitsicherungsmittel gelangt und dabei entweder unmittelbar in diese einfällt oder durch ein anschließendes Drehen der Kupplungseinheit zum Einfallen gebracht wird.

Ergonomisch besonders günstig ist es, wenn durch ein Außenprofil der Kupplungseinheit und durch deren Kupplungseinheitführungsmittel mindestens eine vorbestimmte, relative Einführungswinkellage der Kupplungseinheit gegenüber den Kupplungseinheitführungsmitteln um eine durch die Kupplungseinheitführungsmittel definierte Führungsachse festgelegt ist und wenn ein Riegelelement der Kupplungseinheit und die Kupplungseinheitsicherungsmittel derart an der Kupplungseinheit bzw. an den Kupplungseinheitführungsmitteln lokalisiert sind, daß sie in dieser relativen Einführungswinkellage in Eingriff treten können. Bei dieser Ausführungsform braucht man nur in dem Augenblick, in dem die Kupplungseinheit in die Kupplungseinheitführungsmittel als Folge des Einsenkens des Schließkabels in den Kabelführungskanal einzutauchen beginnt, durch Drehen an der Kupplungseinheit die relative Einführungswinkellage herbeizuführen und es ist dann gewährleistet, daß im Zuge des weiteren Einsenkens des Schließkabels in den Kabelführungskanal das Riegelelement in die Kupplungseinheitsicherungsmittel eintreten kann.

Das Schließkabel kann beispielsweise an seinem beim Einführen vorlaufenden Ende Träger eines Gegenkupplungsstücks sein, welches an der Kupplungseinheit dann verankerbar ist, wenn die Kupplungseinheit außer Eingriff mit den Kupplungseinheitführungsmitteln ist.

Das Gegenkupplungsstück kann an der Kupplungseinheit durch Eingabe eines Schließgeheimnisses in die Kupplungseinheit verankerbar oder/und lösbar ist, welches auch der Lösung der Kupplungseinheit aus dem Eingriff mit den Kupplungseinheitsicherungsmitteln dient. Dies hat den Vorteil, daß der Benutzer nur ein einziges Schließgeheimnis sich merken muß oder einen einzigen Schlüssel mitführen muß, um einerseits die Sicherung und Entsicherung der Kupplungseinheit an dem Fahrzeugrahmen vorzunehmen und um andererseits die Verankerung des Gegenkupplungsstücks an der Kupplungseinheit herbeizuführen oder/und zu lösen.

Nach einer bevorzugten Ausführungsform ist vorgesehen, daß die Kupplungseinheit ein unter Schließgeheimniseingabe verstellbares Steuerungselement umfaßt, welches einerseits der Überführung eines mit den Kupplungseinheitsicherungsmitteln zusammenwirkenden Riegelelements aus einer die Kupplungseinheit in den Kupplungseinheitführungsmitteln sichernden Sicherungsstellung in eine die Entnahme der Kupplungseinheit aus den Kupplungseinheitführungsmitteln gestattende Entnahmestellung bewirken kann und andererseits die Verankerung eines an dem Schließkabel angeordneten Gegenkupplungselements an der Kupplungseinheit und/oder die Lösung dieser Verankerung bewirken kann.

Konstruktiv ist es dabei vorteilhaft, daß für ein mit den Kupplungseinheitsicherungsmitteln zusammenwirkendes Riegelelement der Kupplungseinheit und für ein an dem Schließkabel angebrachtes Gegenkupplungsstück zueinander parallele Führungen in der Kupplungseinheit vorgesehen sind.

Eine weitere konstruktive Vereinfachung ergibt sich dann, wenn für das Gegenkupplungsstück und das Riegelelement innerhalb der Kupplungseinheit konzentrische Führungen vorgesehen sind.

Eine konstruktiv besonders günstige Gestaltung ergibt sich, wenn das Riegelelement als ein zu einer Außenfläche der Kupplungseinheit hin offenes, topfförmiges Riegelelement in einer Riegelelementführung der Kupplungseinheit geführt ist und wenn das Gegenkupplungsstück in einen Innenraum des topfförmigen Riegelelements einsetzbar und darin führbar ist.

Nach einer konstruktiv günstigen Weiterbildung ist vorgesehen, daß ein bei Eingabe des Schließgeheimnisses in die Kupplungseinheit drehbares Steuerungselement das topfförmige Riegelelement im wesentlichen diametral durchsetzt, daß im Bereich mindestens eines Durchtrittsschlitzes eines Topfmantels an dem drehbaren Steuerungselement Nockenmittel zur Verschiebung des topfförmigen Riegelelements in der Riegelelementführung vorgesehen sind und daß innerhalb des Topfmantels an dem drehbaren Steuerungselement Verankerungsmittel für das Gegenkupplungsstück vorgesehen sind, welche in einer Einschub-Austrittsstellung das Einschieben des Gegenkupplungsstücks in das topfförmige Riegelelement gestatten und in einer Verankerungs-Stellung das Zurückziehen des Gegenkupplungsstücks aus dem topfförmigen Riegelelement verhindern. Dabei ist insbesondere daran gedacht, daß das topfförmige Riegelelement durch Federmittel in Richtung auf die Sicherungsstellung vorgespannt ist, und daß das topfförmige Riegelelement durch die Nockenmittel entgegen der Wirkung der Federmittel in die Entnahmestellung überführbar ist.

Eine ergonomisch für den Benutzer des Fahrzeugs bzw. Kabelschlosses sehr vorteilhafte Lösung beruht darauf, daß das drehbare Steuerungselement von einer ersten Drehstellung aus gegen die Wirkung von Torsionsfedermitteln in eine zweite Drehstellung verdrehbar ist,
wobei in der ersten Drehstellung die Nockenmittel einen durch die Federmittel bewirkten Übergang des Riegelelements aus der Entnahmestellung in die Sicherungsstellung freigeben und die Verankerungsmittel die Verankerungssstellung einnehmen,
wobei weiter in der zweiten Drehstellung die Nockenmittel den Übergang des topfförmigen Riegelelements von der Entnahmestellung in die Sicherungsstellung verhindern und die Verankerungsmittel die Einschub-Austrittsstellung einnehmen,
wobei weiter der zweiten Drehstellung Hemmmittel zugeordnet sind, welche bei entnommenem Gegenkupplungsstück die Rückkehr des drehbaren Steuerungselements aus der zweiten Drehstellung in die erste Drehstellung hemmen,
wobei weiter die Hemmittel durch Verschieben des Riegelelements mittels des in das topfförmige Riegelelement bereits eingeschobenem Gegenkupplungsstücks lösbar sind mit der Folge, daß das drehbare Steuerungselement unter der Wirkung der Torsionsfedermittel in die erste Drehstellung zurückfällt, in welcher das Gegenkupplungsstück durch die dann in Verankerungsstellung befindlichen Verankerungsmittel innerhalb des topfförmigen Riegelelements verankert ist,
wobei weiter zum Zwecke des Lösens der Verankerung des Gegenkupplungsstücks das drehbare Steuerungselement aus der ersten Drehstellung gegen die Wirkung der Torsionsfedermittel wieder in die zweite Drehstellung überführbar ist,
mit der Folge, daß die Hemmittel durch die Wirkung der Federmittel wieder wirksam werden, das drehbare Steuerungselement in der zweiten Drehstellung verharrt und das Gegenkupplungsstück aus dem topfförmigen Riegelelement austreten kann, und
wobei das Drehsteuerungselement nach Austreten des Gegenkupplungsstücks aus dem topfförmigen Riegelelement durch einen Benutzer unter Überwindung der Hemmittel wieder in Richtung auf die erste Drehstellung verstellbar ist.

Bei dieser Ausführungsform betsehen dann, wenn das Gegenkupplungsstück aus der Kupplungeinheit unter Schlingenöffnung zurückgezogen worden ist und das Kabelschloß nunmehr am Fahrzeug gesichert werden soll zwei Möglichkeiten:

Entweder man schiebt das Kabel bis zu seiner innerst möglichen Stellung in den Kabelführungskanal ein, wobei das Riegelelement bereits in Flucht mit den Kupplungseinheitsicherungsmitteln gebracht wird und benutzt dann den Schlüssel oder das Zifferngeheimnis, um das Drehsteuerungselement unter Überwindung der Hemmittel wieder in die erste Drehstellung gelangen zu lassen mit der Folge, daß dann das Riegelelement in die Kupplungseinheitsicherungsmittel eintritt.

Alternativ kann man sofort nach dem Öffnen der Schlinge durch Herausziehen des Gegenkupplungsstücks aus der Kupplungseinheit den Schlüssel ansetzen (oder die Geheimnis entsprechende Ziffernkombination einstellen) und das Drehsteuerungselement unter Überwindung der Hemmittel sofort wieder in die erste Drehstellung zurückführen. Wenn man dann anschließend das Schließkabel vollständig in den Kabelführungskanal einsenkt, so wird das Riegelelement zunächst gegen die Wirkung der Federmittel in seine Entnahmestellung zurückgedrückt, schnappt aber nach Erreichen des Bereichs der Kupplungseinheitsicherungsmittel zwangsläufig nach Art einer Schloßfalle in die Kupplungseinheitsicherungsmittel ein.

In beiden Fällen kann die Kupplungseinheit nur unter Anwendung des Schließgeheimnisses wieder aus den zugehörigen Kupplungseinheitführungsmitteln gelöst werden, wenn überhaupt eine Sicherung gegen Entnahme durch Unbefugte beabsichtigt ist. Falls eine Entnahmesicherung gegen unbefugten Entnahmeversuch nicht gewünscht ist, so ist es auch denkbar, das Riegelelement etwa durch eine Lösetaste wieder lösbar zu machen oder dafür zu sorgen, daß durch eine erhöhte Auszugskraft auf die Kupplungseinheit das Riegelelement wieder gelöst wird.

Das topfförmige Riegelelement kann beispielsweise an einem topfbodenfernen Mantelrand mit einem Schrägzahn ausgeführt ist, welcher beim Einführen der Kupplungseinheit in ihre Kupplungseinheitführungsmittel durch Zusammenwirken mit diesen letzteren eine Verschiebung des topfförmigen Riegelelements in Richtung auf dessen Entnahmestellung gegen die Wirkung der Federmittel herbeiführt mit der Folge, daß das topfförmige Riegelelement unter der Wirkung der Federmittel in seine Sicherungsstellung zurückfällt, sobald im Zuge der weiteren Einführung der Kupplungseinheit in die Kupplungseinheitführungsmittel das topfförmige Riegelelement in den Bereich der Kupplungseinheitsicherungsmittel gelangt.

Die Kupplungseinheitsicherungsmittel können beispielsweise von einer Senke oder einer Ausnehmung in einem die Kupplungseinheitführungsmittel bildenden Kupplungseinheitführungsgehäuse gebildet sind. Die Senke kann auch eine Ringsenke sein. In diesem Fall führt das vollständige Einschieben der Kupplungseinheit in ihre Kupplungseinheitführungsmittel zwangsläufig und unabhängig von der Winkellage der Kupplungseinheit um die Führungsachse zu einer Sicherung. Wenn die Senke oder Ausnehmung nur auf einen kleinen Umfangsbereich beschränkt ist, so ist zur Herbeiführung der Sicherung der Kupplungseinheit ein Drehen der Kupplungseinheit um die Führungsachse erforderlich entweder bevor die Kupplungseinheit überhaupt in die Kupplungseinheitführungsmittel eintreten kann oder nachdem die Kupplungseinheit vollständig in die Kupplungseinheitführungsmittel eingeführt worden ist.

Die Kupplungseinheit kann beispielsweise mit einem schlüsselbetätigten Schließylinder ausgeführt werden. In diesem Fall ist eine konstruktiv einfache Baueinheit dadurch zu gewinnen, daß ein durch Schlüssel drehbarer Schließzylinderkern des Schließzylinders mit einem drehbaren Steuerungselement zur gemeinsamen Drehung verbunden ist, wobei dieses drehbare Steuerungselement zur Einwirkung auf ein Riegelelement der Kupplungseinheit bestimmt ist, welches mit den Kupplungseinheitsicherungsmitteln zusammenwirkt und ferner dazu bestimmt ist, die Verankerung eines mit dem Schließkabel verbundenen Gegenkupplungsstück innerhalb der Kupplungseinheit zu veranlassen.

Es ist auch denkbar, daß die Kupplungseinheit mit einem Zifferneinstellwerk ausgeführt ist. In diesem Fall kann entweder die Einstellung des Zifferneinstellwerks zwangsläufig zur gewünschten Dreheinstellung des drehbaren Steuerungselements führen oder es kann durch die Einstellung des Zifferneinstellwerks die Drehbarkeit des drehbaren Steuerungselements herbeigeführt werden, so daß dieses anschließend in die jeweils gewünschte Drehstellung gebracht wird.

Die Verankerung eines an dem Schließkabel angebrachten Gegenkupplungsstücks in der Kupplungseinheit kann in der Weise bewirkt werden, daß ein an dem Schließkabel angebrachtes Gegenkupplungsstück mit einem beim Einsetzen des Gegenkupplungsstücks in die Kupplungseinheit zum Vorlauwende des Gegenkupplungsstücks hin offenen und hinterschnittenen Schlitz ausgeführt ist und daß in der Kupplungseinheit ein unter Schließgeheimniseingabe drehbares Steuerungselement vorgesehen ist, welches im Zusammenwirken mit dem Schlitz in einer zweiten Drehstellung das Einsetzen des Gegenkupplungsstücks in die Kupplungseinheit gestattet und in einer ersten Drehstellung das Rückziehen des Gegenkupplungsstücks aus der Kupplungseinheit verhindert.

Die Kupplungseinheitführungsmittel können als ein Kupplungseinheitführungsgehäuse ausgebildet sein, welches an einem ersten Ende offen ist. Bei dieser Ausführungsform ist die Kupplungseinheit durch das Kupplungseinheitführungsgehäuse gegen Schlagbeschädigung und/oder Verschmutzung geschützt.

Die Kupplungseinheitführungsmittel können mit einem zweiten Ende an einem den Kabelführungskanal bildenden Führungsrohr befestigt sein. Dann ist das Schließkabel einschließlich der Kupplungseinheit und eines etwaigen Gegenkupplungsstücks auf seiner ganzen Länge im Mitführzustand festgelegt und gestützt.

Die Kupplungseinheitführungsmittel können im wesentlichen geradlinig an ein Endstück des Kabelführungskanals anschließen. Dies ist eine ergonomisch besonders günstige Lösung, weil dann das Schließkabel am leichtesten in das Kabelführungsrohr und dementsprechend die Kupplungseinheit am leichtesten in die Kupplungseinheitführungsmittel eingeschoben werden kann. Dies gilt insbesondere dann, wenn das Kabel in eine gestreckte Lage durch innere Seilkräfte vorgespannt ist, aber auch dann, wenn das Kabel durch innere Seilkräfte in eine die Schlingenbildung erleichternde gekrümmte Lage vorgespannt ist.

Der Kabelführungskanal kann von einem an dem Fahrzeugrahmen befestigten Kabelführungsrohr gebildet sein, dessen Hauptzweck die Kabelführung ist. Dieses Kabelführungsrohr kann an dem Fahrzeugrahmen durch Befestigungsmittel befestigt sein, welche nach Sichern der Kupplungseinheit unzugänglich sind, so daß einem Unbefugten die Entnahme des Kabelführungsrohrs unmöglich gemacht ist.

Es ist aber auch möglich, daß der Kabelführungskanal von dem Innenraum eines tragenden Elements eines Fahrzeugrahmens gebildet ist.

Die Erfindung betrifft weiter ein Kabelschloß für ein Fahrzeug, umfassend ein Schließkabel mit einer auf ein Schließgeheimnis reagierenden Kupplungseinheit und einem in der Kupplungseinheit verankerbaren Gegenkupplungsstück, wobei an der Kupplungseinheit Verankerungsmittel zum Verankern des Gegenkupplungsstücks und Festlegemittel zum Festlegen der Kupplungseinheit an einem Fahrzeugrahmen vorgesehen sind, wobei weiter die Verankerungsmittel und die Festlegemittel durch ein gemeinsames Schließgeheimnis beeinflußbar sind, wobei weiter in der Kupplungseinheit ein bei Anwendung des Schließgeheimnisses zwischen einer ersten Steuerstellung und einer zweiten Steuerstellung verstellbares Steuerelement vorgesehen ist, wobei weiter in der ersten Steuerstellung des Steuerelements die Festlegemittel festlegebereit sind und die Verankerungsmittel entweder - bei eingesetztem Gegenkupplungsstück - dieses in der Kupplungseinheit verankern können oder - bei nicht eingesetztem Gegenkupplungsstück - dessen Einführung in die Kupplungseinheit verhindern können, wobei weiter in der zweiten Steuerstellung des Steuerungselements die Festlegemittel nicht festlegebereit sind und die Verankerungsmittel eine Eintritts-Austrittsstellung für das Gegenkupplungsstück einnehmen, wobei weiter Rückstellmittel vorgesehen sind, welche das Steuerungselement in Richtung einer Rückstellung von der zweiten Steuerstellung in die erste Steuerstellung vorspannen, wobei weiter Hemmittel vorgesehen sind, welche bei nicht eingesetztem Gegenkupplungsstück eine durch die Rückstellmittel veranlaßte Rückkehr des Steuerelements aus der zweiten Steuerstellung in die erste Steuerstellung hemmen, wobei weiter die Hemmwirkung der Hemmittel bei Einführung des Gegenkupplungsstücks in die Kupplungseinheit lösbar ist mit der Folge, daß das Steuerungselement aus der zweiten Steuerstellung in die erste Steuerstellung zurückspringt und damit die Verankerungsmittel das Gegenkupplungsstück in der Kupplungseinheit vorankern, wobei weiter durch Verstellen des Steuerungselements aus der ersten Steuerstellung in die zweite Steuerstellung entgegen der Wirkung der Rückstellmittel die Verankerungsmittel wieder in die Eintritts-Austrittsstellung überführbar und die Hemmittel wieder hemmungsaktivierbar sind mit der Folge, daß das Gegenkupplungsstück entnommen werden kann, hierbei aber das Steuerelement durch die Wirkung der Hemmittel in der zweiten Steuerstellung verbleibt, und wobei das Steuerungselement unter durch Überwindung der Hemmittel aus der zweiten Steuerstellung in die erste Steuerstellung überführbar ist.

Die beiliegenden Figuren erläutern die Erfindung anhand eines Ausführungsbeispiels. Es stellen dar:
- Figur 1: einen Teilbereich eines Fahrradrahmens mit einem Kabelschloß in Mitführstellung;
- Figur 2: einen Schnitt nach Linie II-II der Fig. 1 durch eine Kupplungseinheit des Kabelschlosses;
- Figur 3: das Kabelschloß nach Fig. 1 in Schlingenbildungsstellung;
- Figur 4: einen Schnitt nach Linie IV-IV durch die Kupplungseinheit und
- Figur 5: eine Mehrzahl von Betriebsstellungen der Kupplungseinheit mit und ohne Gegenkupplungsstück.

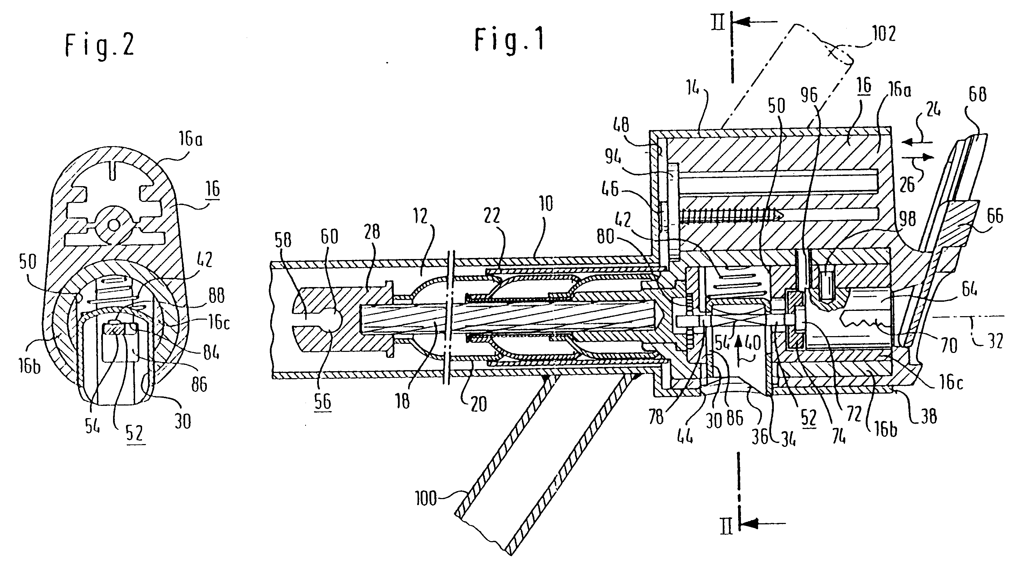

In Fig. 1 ist ein Kabelführungsrrohr eines Fahrzeug- oder Motorradrahmens mit 10 bezeichnet. Es weist einen Kabelführungskanal 12 auf. Am rechten Ende des Kabelführungsrohr 10 ist ein Führungsgehäuse 14 für eine Kupplungseinheit 16 angebracht. Die Kupplungseinheit 16 ist mit einem Schließkabel 18 fest verbunden, welches von einem Gliederpanzer 20 umschlossen ist. Der Gliederpanzer kann aus Stahlhülsen oder Kunststoffhülsen gebildet sein und paßt sich der jeweiligen Krümmung des Schließkabels 18 an. An der Kupplungseinheit 16 ist ein Stabilisierungsrohr 22 befestigt, welches den der Kupplungseinheit nahen Abschnitt des Schließkabels 18 in einer vorbestimmten Geradestellung hält. Die Kupplungseinheit 16 ist in Pfeilrichtung 24 in das Führungsgehäuse 14 einführbar und in Pfeilrichtung 26 aus dem Führungsgehäuse 14 ausziehbar. Die Kupplungseinheit 16 weist ein unrundes Profil auf und kann nur in einer einzigen Winkellage in das Führungsgehäuse 14 eingeführt werden. Das Einführen der Kupplungseinheit 16 in das Führungsgehäuse 14 erfolgt in einem Zug mit dem Einschieben des Schließkabels 18 in den Kabelführungskanal 12. Dabei läuft in Pfeilrichtung 24 ein Gegenkupplungsstück 28 voraus in den Führungskanal 12 ein. In der Kupplungseinheit ist ein topfförmiges Riegelelement 30 orthogonal zu einer Führungsachse 32 verschiebbar geführt. Das topfförmige Riegelelement 30 weist einen Zahn 34 mit einer Einführungsschräge 36 auf. Wenn das Schließkabel 18 in den Führungskanal 12 eingeführt und im Zuge dieser Einführung die Kupplungseinheit 16 nach Einstellung der den Eintritt in das Führungsgehäuse 14 gestattenden Winkellage in das Führungsgehäuse 14 eingeschoben wird, so gelangt die Einführungsschräge 36 in Berührung mit einer Kante 38 des Führungsgehäuses 14 und das Riegelelement 30 wird in Pfeilrichtung 40 in die Kupplungseinheit 16 hinein zurückgeschoben, im wesentlichen orthogonal zu der Führungsachse 32. Das Einschieben des Riegelelements 30 erfolgt gegen die Wirkung einer Schraubendruckfeder 42, welche in der Kupplungseinheit 16 abgestützt ist. In dem Führungsgehäuse 14 ist eine Ausnehmung 44 vorgesehen, welche als ein Kupplungseinheitsicherungsmittel 44 dient. Bevor die Kupplungseinheit 16 mit einer Montageschraube 46, welche dem Zusammenbau der Kupplungseinheit 16 dient, gegen eine Stirnwand 48 des Führungsgehäuses 14 anschlägt, fällt das Riegelelement 30 mit dem Zahn 34 in die Ausnehmung 44 hinein, so daß die Kupplungseinheit 16 für die Mitführung des Kabelschlosses während der Fahrt an dem Fahrzeugrahmen gegen Entnahme gesichert ist und auch nicht unbeabsichtigt aus dem Führungskanal 12 herauswandern kann.

Zum Abschließen des Fahrrads wird das Riegelelement 30 aus der Ausnehmung 44 zurückgezogen. Dann kann die Kupplungseinheit 16 aus dem Führungsgehäuse 14 in Pfeilrichtung 26 herausgezogen werden und gleichzeitig kann das Schließkabel 18 aus dem Kabelführungskanal 12 herausgezogen werden. Auf diese Weise kann das gesamte Kabelschloß von dem Fahrradrahmen getrennt werden. Anschließend kann das Kabelschloß unter Bildung einer Schlinge um ein Rahmenteil, beispielsweise das Rahmenrohr 10 des Fahrzeugrahmens und gleichzeitig um einen Baum oder Mast gelegt werden, worauf das Gegenkupplungsstück 28 in das topfförmige Riegelelement eingeschoben und das innerhalb dieses in der Kupplungseinheit 16 verankert werden kann.

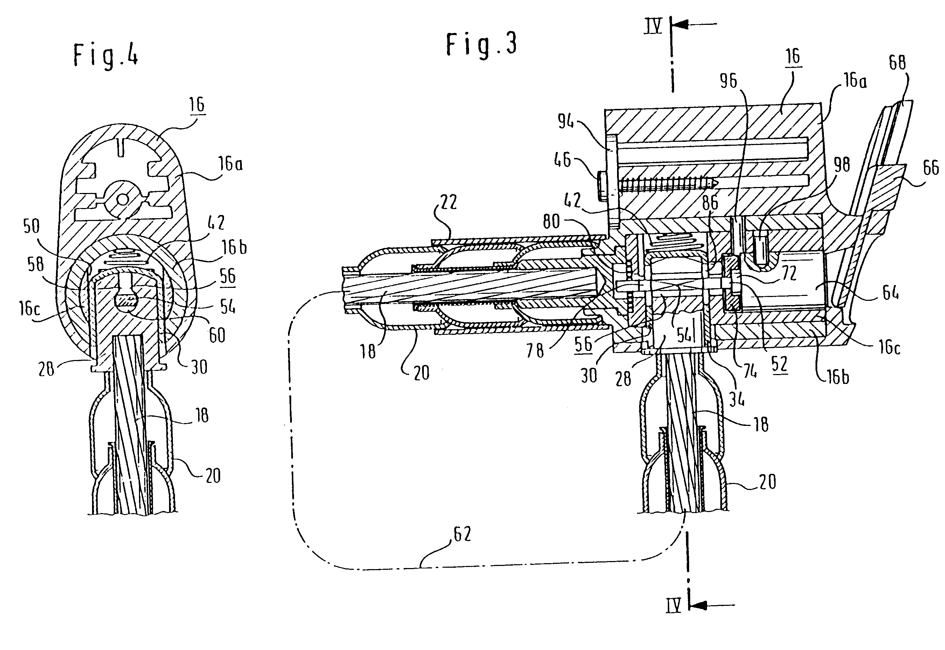

In der Kupplungseinheit ist ein Gleitkanal 50 für das Riegelelement 30 ausgebildet. Der Gleitkanal 50 und das Riegelelement 30 werden von einem drehbaren Steuerungselement 52 diametral durchsetzt. Dieses drehbare Steuerungselement ist innerhalb des topfförmigen Riegelelements 30 mit einem rechteckigen Verankerungsabschnitt 54 ausgeführt. Dieser rechteckige Verankerungsabschnitt 54 ist, wie aus Fig. 4 zu ersehen, einem schlüssellochartigen Schlitz 56 des Gegenkupplungsstücks 28 angepaßt. Der Schlitz setzt sich zusammen aus einem verjüngten, nach oben offenen Durchgangsabschnitt 58 und einem verbreiterten, annähernd kreisförmigen Verankerungsausnehmung 60.

Wenn, wie in Figuren 3 und 4 dargestellt, der Verankerungsabschnitt 54 eine erste Drehstellung gemäß Figuren 3 und 4 einnimmt, so ist das Gegenkupplungsstück 28 in der Kupplungseinheit durch das drehbare Steuerungselement 52, welches in der Kupplungseinheit 16 drehbar gelagert ist, unlösbar verankert. Das Fahrrad ist dann unter Bildung einer Schlinge 62 gemäß Figur 3 an einem Baum oder einem Mast gesichert, so daß es nicht von Unbefugten entfernt werden kann. Zum Lösen der Sicherung des Fahrrads muß das Gegenkupplungsstück 28 aus der Verankerung in der Kupplungseinheit 16 gelöst werden.

Wenn das Gegenkupplungsstück 28 von der Kupplungseinheit 16 gelöst ist, so kann für den Fahrbetrieb das Schließkabel in den Kabelführungskanal 12 eingeführt werden, wobei gleichzeitig die Kupplungseinheit 16 in das Führungsgehäuse 14 eintritt und das Riegelelement 30 mit dem Zahn 34 in die Ausnehmung 44 einfällt, wie in Figur 1 dargestellt.

In der Kupplungseinheit 16 ist ein Schließzylinder 64 untergebracht, der durch einen Schlüssel 70 betätigbar ist. Der Schlüssel kann nach Verschieben eines Schutzschiebers 66, welcher in einer Schutzschieberführung 68 der Kupplungseinheit 16 geführt ist, aus seiner in Figuren 1 und 2 gezeigten Schutzstellung in den Schließzylinder eingegeben werden, wie in Figur 1 bei 70 dargestellt ist. Der Schließzylinder 64 umfaßt einen Schließzylinderkern 72, der nur nach Stecken eines dem Schließgeheimnis des Schließzylinders 64 angepaßten Schlüssels gedreht werden kann. Der Schließzylinderkern ist mit dem drehbaren Steuerungselement 52 drehfest verbunden und kann überdies mit einer Drehscheibe 74 verbunden sein, welche Schutz- und Lagerungsfunktionen erfüllen kann.

In Figur 1 nimmt der Schließzylinderkern 72 eine Nullstellung ein, in welcher allein der Schlüssel 70 gesteckt und gezogen werden kann. Diese Nullstellung entspricht der in Figuren 1, 3 und 4 gezeigten Drehstellung des rechteckigen Verankerungsabschnitts 54. In Figur 1 ist jedoch das Gegenkupplungsstück 28 entgegen der Darstellung in Figur 4 nicht in das topfförmige Riegelelement eingesteckt.

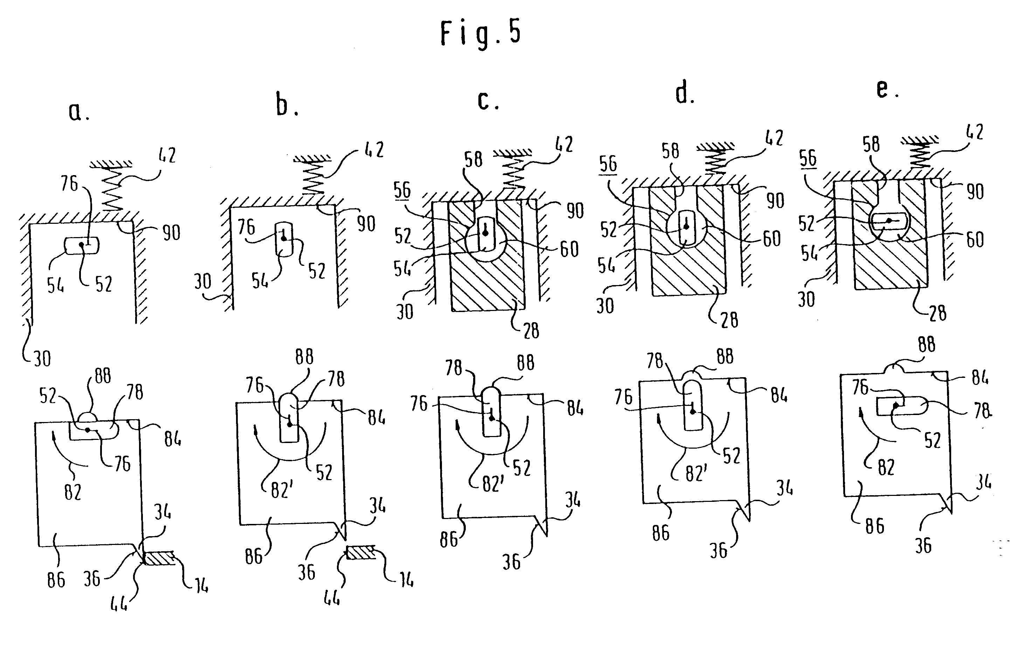

Dieser Zustand ist schematisch in Figur 5 in der Spalte a. dargestellt. Man erkennt dort in der oberen Teilansicht den rechteckigen Verankerungsabschnitt 54 in seiner ersten Drehstellung, wobei eine Orientierungsmarke 76 horizontal liegt. In der unteren Teildarstellung der Figur 5a erkennt man einen Nocken 78, der mit seiner Längserstreckung dann horizontal liegt, wenn auch der reckteckige Verankerungsabschnitt 54 entsprechend der oberen Darstellung von Figur 5a horizontal liegt. Dies ist in der unteren Teilansicht von Figur 5a wieder durch die Orientierungsmarke 76 angedeutet.

In der Stellung des drehbaren Steuerungselements 52 gemäß Figuren 1 und 5a nimmt das Riegelelement 30 seine Tiefststellung ein, in welcher das Riegelelement 30 mit seinem Zahn 34 die Ausnehmung 44 des Führungsgehäuses 14 durchsetzt.

Es soll nun die Schließeinheit 16 aus dem Führungsgehäuse 14 in Pfeilrichtung 26 zurückgezogen werden und das Schließkabel 18 aus dem Führungskanal 12 zurückgezogen werden, um, ausgehend von der Fahrbetriebsstellung gemäß Figur 1, eine Sicherung des Fahrrads gemäß Figur 3 herbeizuführen. Es muß also zunächst das Riegelelement 30 aus der Sicherungsstellung gemäß Figur 1 angehoben werden, so daß der Zahn 34 nicht mehr in die Ausnehmung 44 eingreift. Hierzu wird mittels des gesteckten, geheimnisangepaßten Schlüssels 70 der Schließzylinderkern 72, ausgehend von der Stellung gemäß Figuren 1 und 5a, um 90° im Gegenzeigersinn gedreht in die Stellung gemäß Figur 5b. Diese Drehbewegung erfolgt gegen die Wirkung eines Torsionsfederelements 80, welches mit seinem äußeren Ende an der Kupplungseinheit 16 drehfest verankert ist und mit seinem inneren Ende an dem drehbaren Steuerungselement 52 angreift. In Figur 5a ist durch einen kurzen Drehpfeil 82 angedeutet, daß das Torsionsfederelement 82 schon in der ersten Drehstellung gemäß Figur 5a einem Rückstellmoment unterliegt, welches das drehbare Steuerungselement 52 in die erste Drehstellung gemäß Figuren 1 und 5a vorspannt. Durch Drehen des Steuerungselements 52 um 90° gegen den Uhrzeigersinn wird das Rückstellmoment wie in Figur 5b durch den verlängerten Drehpfeil 82' angedeutet noch vergrößert.

Wenn nun das Steuerungselement 52 ausgehend von der Stellung gemäß Figur 5a um 90° im Gegenzeigersinn in die Stellung gemäß Figur 5b verdreht wird, so gleitet der Nocken 78 an der Oberkante 84 eines Mantelschlitzes 86 des topfförmigen Riegelelements 30 entlang mit der Folge, daß das topfförmige Riegelelement 30 aus seiner untersten Stellung gemäß Figur 1 und Figur 5a in die Stellung gemäß Figur 5b angehoben wird und gleichzeitig auch der Zahn 34 aus dem Eingriff mit der Ausnehmung 44 gelöst wird. Die Aufwärtsverschiebung des Riegelelements 30 erfolgt gegen die Warkung der Schraubendruckfeder 42, die dabei komprimiert wird. Wenn der Nocken 78 die Stellung gemäß Figur 5b entsprechend einer zweiten Drehstellung des drehbaren Steuerungselements 52, wie dargestellt in Figur 5b, errecht, so gelangt der Nocken 78 in Deckung mit einer Rastausnehmung 88, welche in die Oberkante 84 des Mantelschlitzes 86 eingeformt ist. Dann kann das Riegelelement 30 unter der Wirkung der komprimierten Schraubendruckfeder 42 wieder nach unten schnappen bis der Nocken 78 am Grunde der Rastausnehmung 88 anliegt. Das Riegelelement 30 ist aber dann, wie der Vergleich von Figur 5b und Figur 5a zeigt, immer noch gegenüber der Stellung des Riegelelements 30 gemäß Figur 5a angehoben und zwar soweit, daß der Zahn 34 immer noch außer Eingriff mit der Ausnehmung 44 ist. In der Stellung gemäß Figur 5b nimmt nun, wie aus der oberen Darstellung von Figur 5b zu ersehen, der Verankerungsabschnitt 54 eine in vertikaler Richtung längliche Stellung ein.

Da der Zahn 34 außer Eingriff mit der Ausnehmung 44 ist kann also nun die Kupplungseinheit 16 aus der Mitnahmebetriebsstellung gemäß Figur 1 in Pfeilrichtung 26 herausgezogen werden und das Schließkabel 18 kann aus dem Kabelführungskanal 12 vollständig herausgezogen werden. Wenn dies geschehen ist, kann das Gegenkupplungsstück 28 in der Kupplungseinheit 16, wie aus Figur 3 ersichtlich, verankert werden. Der Verankerungsvorgang ergibt sich im einzelnen aus den Figuren 5c bis 5e.

In Figur 5c ist, wie aus der oberen Darstellung zu ersehen, das Gegenkupplungsstück 28 bereits eingeschoben und zwar soweit, daß es an der Bodenfläche 90 des topfförmigen Riegelelements 30 anliegt. Die Stellung des topfförmigen Riegelelements entspricht aber immer noch der Stellung gemäß Figur 5b. Das Einschieben des Gegenkupplungsstücks 28 in Figur 5c ist möglich, weil der rechteckige Verankerungsabschnitt 54 mit seiner langen Achse parallel zu der Längserstreckung des offenen Durchgangsabschnitts 58 des schlüssellochförmigen Schlitzes 56 steht. Wenn der Zustand gemäß Figur 5c erreicht ist, so ist der Nocken 78 immer noch in Eingriff mit der Rastausnehmung 88 und der rechteckige Verankerungsabschnitt 54 immer noch in Eingriff mit dem Durchgangsabschnitt 58 des Schlitzes 56.

Nunmehr übt der Benutzer auf das Gegenkupplungsstück 28 Druck in Pfeilrichtung 40 der Figur 1 aus, so daß die Schraubendruckfeder 42 noch weiter komprimiert wird, das Riegelelement 30 nocht weiter nach oben wandert und der rechteckige Verankerungsabschnitt 54 vollständig von der kreisförmigen Verankerungsausnehmung 60 aufgenommen wird. Dann ist, wie in der unteren Darstellung von Figur 5d zu erkennen, der Nocken 78 aus der Rastausnehmung 88 herausgetreten und das drehbare Steuerungselement 52 kann dann in die erste Drehstellung gemäß Figur 5e zurückkehren, wobei das Riegelelement 30 seine in Figur 5d erreichte Höhenlage im wesentlichen beibehält und damit auch der Zahn 34 die in Figur 5d erreichte Stellung im wesentlichen beibehält.

In Figur 5e ist das Gegenkupplungsstück 28, wie auch in Figuren 3 und 4 dargestellt, in der Kupplungseinheit 16 verankert. Das Fahrrad ist gesichert. Das drehbare Steuerungselement 52 befindet sich wieder in der ersten Drehstellung gemäß Figur 5a. Der Schließzylinderkern befindet sich in seiner Nullstellung gemäß Figur 1 und der Schlüssel kann abgezogen werden.

Will man nun, ausgehend von der Stellung gemäß Figur 5e, entsprechend Figuren 3 und 4, das Fahrrad wieder entsichern, so ist es notwendig, das drehbare Steuerungselement 52 erneut aus der Stellung gemäß Figur 5e entsprechend der auch in den Figuren 3 und 4 gezeigten ersten Drehstellung in die zweite Drehstellung gemäß Figur 5d durch Schlüsselstecken und drehen überzuführen. Damit tritt der Nocken 78 wieder in Flucht mit der Rastausnehmung 88, entsprechend Figur 5d, und der rechteckige Verankerungsabschnitt 54 mit seiner Längsachse in Parallelstellung zu dem offenen Durchgangsabschnitt 58 des Gegenkupplungsstücks 28. Das Gegenkupplungsstück 28 erhält dann durch die Schraubendruckfeder 42 einen Schub in Richtung auf die Stellung gemäß Figur 5c, in welcher der Nocken 78 wieder in Rastausnehmung 88 eingreift. Damit ist das drehbare Steuerungselement 52 in der zweiten Drehstellung gemäß Figur 5c festgehalten und kann zunächst nicht in die erste Drehstellung gemäß Figur 5a zurückkehren. Das Gegenkupplungsstück 28 kann aber nunmehr vollständig aus der Kupplungseinheit zurückgezogen werden, da der rechteckige Verankerungsabschnitt 54 bereits in den offenen Durchgangsabschnitt 58 eingefädelt ist. Die Lösung des Gegenkupplungsstücks 28 aus der Kupplungseinheit erfolgt entweder stoßartig durch die Entspannung der Schraubenkompressionsfeder 42 von der Stellung gemäß Figur 5d bis in die Stellung gemäß Figur 5c oder wird durch Ausziehen von Hand bewirkt. Damit ist das Fahrrad durch Öffnung der Schlinge 62 wieder entsichert und es bestehe nunmehr die Absicht, das Kabelschloß wieder in die Mitführstellung gemäß Figuren 1 und 2 überzuführen.

Da der Zahn 34 in der zuletzt durch die Schlingenöffnung erreichten Stellung gemäß Figur 5c immer noch (im Vergleich zur Stellung gemäß Figur 5a) nach oben angehoben ist, kann die Kupplungseinheit nunmehr in das Kupplungsgehäuse 14 eingeschoben werden, ohne daß der Zahn 34 gegen die Kante 38 trifft. Wenn der Zahn 34 dann schließlich in Flucht mit der Ausnehmung 30 steht, so kann die Kupplungseinheit 16 wieder in dem Führungsgehäuse 14 gesichert werden. Hierzu muß aber das Verriegelungselement 30 mit dem Zahn 34 wieder nach unten verlagert werden. Dies kann ausgehend von der immer noch vorherrschenden Stellung gemäß Figur 5b dadurch erreicht werden, daß durch den immer noch steckenden Schlüssel 70 oder durch erneutes Einstecken des Schlüssels 70, falls dieser nach dem Öffnen der Schlinge 62 gezogen worden sein sollte, das drehbare Steuerungselement 52 aus der Stellung gemäß Figur 5b in die Stellung gemäß Figur 5a zurückgedreht wird. Die Eingriffsflächen des Nockens 78 und der Rastausnehmung 88 sind hierzu derart gestaltet, daß durch Ausüben eines vergrößerten Drehmoments auf den Schlüssel 70 der Nocken 78 aus der Rastausnehmung 88 entrastet werden kann. Sobald der Nocken 78 aus der Rastausnehmung 88 entrastet ist, wird das drehbare Steuerungselement 52 duch, das von der Torsionsfeder 80 ausgeübte Torsionsmoment 82 in die Drehstellung gemäß Figur 5a zurückgedreht und das Riegelelement 30 kann wieder in die Ausnehmung 44 eintauchen mit der Folge, daß das Riegelelement 30 über den Zahn 34 in der Ausnehmung 44 gesichert ist und die Kupplungseinheit 16 nicht mehr aus dem Führungsgehäuse 14 herausgezogen werden kann.

Man könnte von dem nach Ausziehen des Gegenkupplungsstücks 28 im Zuge der Schlingenöffnung erreichten Zustand gemäß Figur 5b durch Drehen des Schlüssels 70 auch sofort wieder in den Zustand gemäß Figur 5a umschalten, bevor die Kupplungseinheit 16 erneut in das Führungsgehäuse 14 eingeschoben wird. Hierzu ist es wiederum notwendig, den Nocken 78 und die Rastausnehmung 88 so zu gestalten, daß der Nocken 78 durch ein vergrößertes Drehmoment aus der Rastausnehmung 88 herausgedreht werden kann. Man könnte dann anschließend die Kupplungseinheit 16 in das Führungsgehäuse 14 einschieben, dabei das Riegelelement durch Wechselwirkung der Einführungsschräge 36 mit der Kante 38 des Führungsgehäuses 14 kurzfristig anheben und das Riegelelement 30 schließlich nach Erreichung der Stellung gemäß Figur 1 in die Ausnehmung 44 einschnappen lassen. Beide Möglichkeiten stehen dem Benutzer nach Belieben zur Verfügung.

In den Figuren 1 bis 4 ist die Kupplungseinheit 16 dreiteilig ausgeführt mit einem Führungsprofil 16a, einem Außenmantelteil 16b und einem Innenmantelteil 16c, wobei das Außenmantelteil 16b in dem Führungsprofil 16a durch eine Sicherungsplatte 94 und die Schraube 46 gesichert ist. Die beiden Teile 16b und 16c sind dabei durch einen Stift 96 gegeneinander drehgesichert. Weiterhin ist ein Schließzylindergehäuse des Schließzylinders 64 durch einen Sicherungsstift 98 gegen Verdrehung in dem Mantelteil 16c gesichert. Es versteht sich, daß die Teile 16a, 16b und gegebenenfalls 16c einstückig hergestellt sein können.

Gemäß Figur 1 ist das den Kabelführungskanal 12 bildende Rahmenrohr 10 des Fahrradrahmens mit einem weiteren Rahmenrohr 100 verschweißt. Man beachte, daß die Rahmenrohre 10 und 100 derart miteinander verschweißt sind, daß das Rahmenrohr 10 nach rechts offen und mit dem Führungsgehäuse 14 verschweißt werden kann. Wenn es sich bei dem Rahmenrohr etwa um die Horizontalstange eines Herrenfahrrads handelt, so könnte sich das Sattelrohr, wie in Figur 1 bei 102 strichpunktiert angedeutet, nach oben fortsetzen. Auf diese Weise ist die Möglichkeit des Aus- und Einschiebens des Kabelschlosses von hinten in die horizontale Stange 10 gewährleistet. Das Führungsrohr 10 kann aber auch von jedem anderen tragenden Element eines Fahrradrahmens gebildet sein oder auch von einem zusätzlich an dem Fahrradrahmen angebrachten Zusatzrohr.

Das Schließkabel 18 kann in dem Gegenkupplungsstück 28 in nerkömmlicherweise durch Verquetschen verankert sein.

Es ist möglich, daß das Schließkabel 18 auch durch eine seitliche Öffnung des Kabelführungsrohr 10 in den Führungskanal 12 eingeführt wird. In diesem Fall ragt nach Einführung dessen Ende schräg durch diese Öffnung aus dem Kabelführungsrohr 10 heraus. Das Führungsgehäuse 14 könnte in diesem Fall seitlich an dem Führungsrohr 10 angebracht werden und zwar in annähernder Fortsetzung des schräg aus der Öffnung herausragenden Schließkabelendes. Dann bliebe die Möglichkeit erhalten, die Kupplungseinheit in Fortsetzung des Einschiebens des Schließkabels in den Führungskanal 12 in das Führungsgehäuse 14 einzuschieben, ohne daß durch Querkraftausübung eine Querverlagerung der Kupplungseinheit 16 zum Zwecke ihres Einschiebens in das Führungsgehäuse 14 ausgeübt werden müßte. Aber auch die Möglichkeit einer Querverlagerung der Kupplungseinheit 16 zum Zwecke des Einfädelns in das Führungsgehäuse 14 soll im Rahmen der Erfindung nicht ausgeschlossen sein.

Es ist möglich und vorteilhaft an dem in Figur 1 rechten Ende des Führungsgehäuses 14 trichterartige Einweiseflächen vorzusehen, um das Einführen der Kupplungseinheit 16 in das Führungsgehäuse 14 zu erleichtern. Alternativ und/oder zusätzlich können einführungsfördernde Leitflächen auch an der Kupplungseinheit 16 an deren in Figur 1 linken Ende vorgesehen sein.

Es ist auch möglich, die Kupplungseinheit 16 mit einem Rundquerschnitt auszuführen, insbesondere mit einer Außenumfangsfläche konzentrisch zur Achse des Schließkabels. Dann kann auch das Führungsgehäuse 14 mit kreisförmigen Querschnitt ausgeführt werden. In diesem Fall können entweder Führungskeile oder dergleichen die Winkellage der Kupplungseinheit 16 gegenüber dem Führungsgehäuse 14 bestimmen, in welcher die Kupplungseinheit eingeführt werden muß, um zwangsläufig die Sicherung der Kupplungseinheit gegen Ausziehen herbeizuführen. Es ist aber auch denkbar, nach dem Einführen der Kupplungseinheit 16 diese solange zu drehen, bis das Riegelelement 30 in die Ausnehmung 44 einfällt. Schließlich ist es denkbar, an Stelle der Ausnehmung 44 eine Ringnut an der Innenseite des Führungsgehäuses 14 vorzusehen, so daß das Riegelelement 30 in jeder Einführungswinkellage der Kupplungseinheit 16 in diese Ringnut einfaßt und Sicherung herbeiführt.

## Patentansprüche

1. Fahrzeug, insbesondere Zweirad-Fahrzeug, mit einem zugeordneten Kabelschloß,
wobei dieses Kabelschloß ein Schließkabel (18) und in einem Endbereich des Schließkabels (18) eine auf ein Schließgeheimnis (70) reagierende Kupplungseinheit (16) aufweist, welche der Bildung einer Kabelschlinge (62) dient,
wobei weiter das Schließkabel (18) mit seinem der Kupplungseinheit (16) fernen Ende vorauslaufend in einen Kabelführungskanal (12) am Fahrzeugrahmen einsenkbar ist
und wobei die Kupplungseinheit (16) bei in den Kabelführungskanal (12) wenigstens teilweise eingesenktem Schließkabel (18) mit Kupplungseinheitsicherungsmitteln (44) am Fahrzeugrahmen in Sicherungseingriff bringbar ist in der Weise,
daß am Fahrzeugrahmen (10) Kupplungseinheitführungsmittel (14) für die Kupplungseinheit (16) vorgesehen sind, in welche die Kupplungseinheit (16) im Zuge der Einführung des Schließkabels (18) in den Kabelführungskanal (12) eintreten kann, und daß die Kupplungseinheitsicherungsmittel (44) im Bereich dieser Kupplungseinheitführungsmittel (14) angebracht sind,
dadurch gekennzeichnet,
daß die Kupplungseinheit (16) aus dem Sicherungseingriff mit den Kupplungseinheitsicherungsmitteln (44) bei Anwendung des Schließgeheimnisses (70) lösbar ist.

2. Fahrzeug nach Anspruch 1,
dadurch gekennzeichnet,
daß die Kupplungseinheit (16) an den Kupplungseinheitsicherungsmitteln (44) unter Anwendung des Schließgeheimnisses (70) sicherbar ist.

3. Fahrzeug nach einem der Ansprüche 1 und 2,
dadurch gekennzeichnet,
daß die Kupplungseinheit (16) an den Kupplungseinheitsicherungsmitteln (44) durch Schnappeingriff sicherbar ist, wenn die Kupplungseinheit (16) beim Einführen in die Kupplungseinheitführungsmittel (14) eine vorbestimmte Stellung (Fig. 1) gegenüber den Kupplungseinheitführungsmitteln (14) erreicht.

4. Fahrzeug nach einem der Ansprüche 1 - 3,
dadurch gekennzeichnet,
daß die Kupplungseinheit (16) ein sie in den Kupplungseinheitsführungsmitteln (14) durch Eingriff mit den Kupplungseinheitsicherungsmitteln (44) sicherndes Riegelelement (30) aufweist, welches im wesentlichen orthogonal zu einer durch die Kupplungseinheitführungsmittel (14) bestimmten Führungsachse (32) relativ zu der Kupplungseinheit (16) beweglich ist.

5. Fahrzeug nach einem der Ansprüche 1 - 4,
dadurch gekennzeichnet,
daß durch ein Außenprofil (16a) der Kupplungseinheit (16) und durch deren Kupplungseinheitführungsmittel (14) mindestens eine vorbestimmte, relative Einführungswinkellage der Kupplungseinheit (16) gegenüber den Kupplungseinheitführungsmitteln (14) um eine durch die Kupplungseinheitführungsmittel (14) definierte Führungsachse (32) festgelegt ist und daß ein Riegelelement (30) der Kupplungseinheit (16) und die Kupplungseinheitsicherungsmittel (44) derart an der Kupplungseinheit (16) bzw. an den Kupplungseinheitführungsmitteln (14) lokalisiert sind, daß sie in dieser relativen Einführungswinkellage in Eingriff treten können.

6. Fahrzeug nach einem der Ansprüche 1 - 5,
dadurch gekennzeichnet,
daß das Schließkabel (18) Träger eines Gegenkupplungsstücks (28) ist, welches an der Kupplungseinheit (16) dann verankerbar ist, wenn die Kupplungseinheit (16) außer Eingriff mit den Kupplungseinheitführungsmitteln (14) ist.

7. Fahrzeug nach Anspruch 6,
dadurch gekennzeichnet,
daß das Gegenkupplungsstück (28) an dem beim Einführen des Schließkabels (18) in den Kabelführungskanal (12) vorlaufenden Ende des Schließkabels (18) angebracht ist.

8. Fahrzeug nach einem der Ansprüche 6 und 7,
dadurch gekennzeichnet,
daß das Gegenkupplungsstück (28) an der Kupplungseinheit (16) unter Eingabe eines Schließgeheimnisses (70) in die Kupplungseinheit (16) verankerbar oder/und lösbar ist, welches auch der Lösung der Kupplungseinheit (16) aus dem Eingriff mit den Kupplungseinheitsicherungsmitteln (44) dient.

9. Fahrzeug nach einem der Ansprüche 1 - 8,
dadurch gekennzeichnet,
daß die Kupplungseinheit (16) ein unter Schließgeheimniseingabe (70) verstellbares Steuerungselement (52) umfaßt, welches einerseits der Überführung eines mit den Kupplungseinheitsicherungsmitteln (44) zusammenwirkenden Riegelelements (30) aus einer die Kupplungseinheit (16) in den Kupplungseinheitführungsmitteln (14) sichernden Sicherungsstellung in eine die Entnahme der Kupplungseinheit (16) aus den Kupplungseinheitführungsmitteln (14) gestattende Entnahmestellung bewirken kann und andererseits die Verankerung eines an dem Schließkabel (18) angeordneten Gegenkupplungsstücks (28) an der Kupplungseinheit und/oder die Lösung dieser Verankerung bewirken kann.

10. Fahrzeug nach einem der Ansprüche 1 - 9,
dadurch gekennzeichnet,
daß für ein mit den Kupplungseinheitsicherungsmitteln (44) zusammenwirkendes Riegelelement (30) der Kupplungseinheit (16) und für ein an dem Schließkabel (18) angebrachtes Gegenkupplungsstück (28) zueinander parallele Führungen (50, 30) in der Kupplungseinheit (16) vorgesehen sind.

11. Fahrzeug nach Anspruch 10,
dadurch gekennzeichnet,
daß für das Gegenkupplungsstück (28) und das Riegelelement (30) innerhalb der Kupplungseinheit (16) konzentrische Führungen (50, 30) vorgesehen sind.

12. Fahrzeug nach Anspruch 11,
dadurch gekennzeichnet,
daß das Riegelelement (30) als ein zu einer Außenfläche der Kupplungseinheit (16) hin offenes, topfförmiges Riegelelement (30) in einer Riegelelementführung (50) der Kupplungseinheit (16) geführt ist und daß das Gegenkupplungsstück (28) in einen Innenraum des topfförmigen Riegelelements (30) einsetzbar und darin führbar ist.

13. Fahrzeug nach Anspruch 12,
dadurch gekennzeichnet,
daß ein bei Eingabe des Schließgeheimnisses (70) in die Kupplungseinheit (16) drehbares Steuerungselement (52) das topfförmige Riegelelement (30) im wesentlichen diametral durchsetzt, daß im Bereich mindestens eines Durchtrittsschlitzes (86) eines Topfmantels an dem drehbaren Steuerungselement (52) Nockenmittel (78) zur Verschiebung des topfförmigen Riegelelements (30) in der Riegelelementführung (50) vorgesehen sind und daß innerhalb des Topfmantels an dem drehbaren Steuerungselement (52) Verankerungsmittel (54) für das Gegenkupplungsstück (28) vorgesehen sind, welche in einer Einschub-Austrittsstellung (Fig. 5c) das Einschieben des Gegenkupplungsstücks (28) in das topfförmige Riegelelement (30) gestatten und in einer Verankerungs-Stellung (Fig. 5e) das Zurückziehen des Gegenkupplungsstücks (28) aus dem topfförmigen Riegelelement (30) verhindern.

14. Fahrzeug nach Anspruch 13,
dadurch gekennzeichnet,
daß das topfförmige Riegelelement (30) durch Federmittel (42) in Richtung auf die Sicherungsstellung (Fig. 5a) vorgespannt ist, und daß das topfförmige Riegelelement (30) durch die Nockenmittel (78) entgegen der Wirkung der Federmittel (42) in die Entnahmestellung (Fig. 5b) überführbar ist.

15. Fahrzeug nach Anspruch 14,
dadurch gekennzeichnet,
daß das drehbare Steuerungselement (52) von einer ersten Drehstellung (Fig. 5a) aus gegen die Wirkung von Torsionsfedermitteln (80) in eine zweite Drehstellung (Fig. 5b) verdrehbar ist,
wobei in der ersten Drehstellung (Fig. 5a) die Nockenmittel (78) einen durch die Federmittel (42) bewirkten Übergang des Riegelelements (30) aus der Entnahmestellung (Fig. 5b) in die Sicherungsstellung (Fig. 5a) freigeben und die Verankerungsmittel (54) die Verankerungssstellung einnehmen,
wobei weiter in der zweiten Drehstellung (Fig. 5b) die Nockenmittel (78) den Übergang des topfförmigen Riegelelements (30) von der Entnahmestellung (Fig. 5b) in die Sicherungsstellung (Fig. 5a) verhindern und die Verankerungsmittel (54) die Einschub-Austrittsstellung (Fig. 5b) einnehmen,
wobei weiter der zweiten Drehstellung (Fig. 5b) Hemmmittel (88) zugeordnet sind, welche bei entnommenem Gegenkupplungsstück (28) die Rückkehr des drehbaren Steuerungselements (52) aus der zweiten Drehstellung (Fig. 5b) in die erste Drehstellung (Fig. 5a) hemmen,
wobei weiter die Hemmittel (88) durch Verschieben des Riegelelements mittels des in das topfförmige Riegelelement (30) bereits eingeschobenem Gegenkupplungsstücks (28) lösbar sind mit der Folge, daß das drehbare Steuerungselement (52) unter der Wirkung der Torsionsfedermittel (80) in die erste Drehstellung (Fig. 5e) zurückfällt, in welcher das Gegenkupplungsstück (28) durch die dann in Verankerungsstellung befindlichen Verankerungsmittel (54) innerhalb des topfförmigen Riegelelements (30) verankert ist,
wobei weiter zum Zwecke des Lösens der Verankerung des Gegenkupplungsstücks (28) das drehbare Steuerungselement (52) aus der ersten Drehstellung (Fig. 5e) gegen die Wirkung der Torsionsfedermittel (80) wieder in die zweite Drehstellung (Fig. 5d) überführbar ist, mit der Folge, daß die Hemmittel (88) durch die Wirkung der Federmittel (42) wieder wirksam werden (Fig. 5c), das drehbare Steuerungselement (52) in der zweiten Drehstellung (Fig. 5c) verharrt und das Gegenkupplungsstück (28) aus dem topfförmigen Riegelelement (30) austreten kann, und
wobei das Drehsteuerungselement (52) nach Austreten des Gegenkupplungsstücks (Fig. 5b) aus dem topfförmigen Riegelelement (30) durch einen Benutzer unter Überwindung der Hemmittel (88) wieder in Richtung auf die erste Drehstellung (Fig. 5a) verstellbar ist.

16. Fahrzeug nach einem der Ansprüche 14 und 15,
dadurch gekennzeichnet,
daß das topfförmige Riegelelement (30) an einem topfbodenfernen Mantelrand mit einem Schrägzahn (34) ausgeführt ist, welcher beim Einführen der Kupplungseinheit (16) in ihre Kupplungseinheitführungsmittel (14) durch Zusammenwirken mit diesen letzteren eine Verschiebung des topfförmigen Riegelelements (30) in Richtung auf dessen Entnahmestellung gegen die Wirkung der Federmittel (42) herbeiführt mit der Folge, daß das topfförmige Riegelelement (30) unter der Wirkung der Federmittel (42) in seine Sicherungsstellung (Fig. 5a) zurückfällt, sobald im Zuge der Einführung der Kupplungseinheit (16) in die Kupplungseinheitführungsmittel (14) das topfförmige Riegelelement (30) in den Bereich der Kupplungseinheitsicherungsmittel (44) gelangt.

17. Fahrzeug nach einem der Ansprüche 1 - 16,
dadurch gekennzeichnet,
daß die Kupplungseinheitsicherungsmittel (44) von einer Senke oder einer Ausnehmung in einem die Kupplungseinheitführungsmittel (14) bildenden Kupplungseinheitführungsgehäuse (14) gebildet sind.

18. Fahrzeug nach einem der Ansprüche 1 - 17,
dadurch gekennzeichnet,
daß die Kupplungseinheit (16) einen schlüsselbetätigten Schließzylinder (64) umfaßt.

19. Fahrzeug nach Anspruch 18,
dadurch gekennzeichnet,
daß ein durch Schlüssel (70) drehbarer Schließzylinderkern (72) des Schließzylinders (64) mit einem drehbaren Steuerungselement (52) zur gemeinsamen Drehung verbunden ist, wobei dieses drehbare Steuerungselement (52) zur Einwirkung auf ein Riegelelement (30) der Kupplungseinheit (16) bestimmt ist, welches mit den Kupplungseinheitsicherungsmitteln (44) zusammenwirkt und ferner dazu bestimmt ist, ein mit dem Schließkabel (18) verbundenes Gegenkupplungsstück (28) innerhalb der Kupplungseinheit (16) zu verankern.

20. Fahrzeug nach einem der Ansprüche 1 - 18,
dadurch gekennzeichnet,
daß die Kupplungseinheit (16) mit einem Zifferneinstellwerk ausgeführt ist.

21. Fahrzeug nach einem der Ansprüche 1 - 20,
dadurch gekennzeichnet,
daß ein an dem Schließkabel (18) angebrachtes Gegenkupplungsstück (28) mit einem beim Einsetzen des Gegenkupplungsstücks (28) in die Kupplungseinheit (16) zum Vorlaufende des Gegenkupplungsstücks (28) hin offenen und hinterschnittenen Schlitz (56) ausgeführt ist und daß in der Kupplungseinheit (16) ein unter Schließgeheimniseingabe drehbares Steuerungselement (52) vorgesehen ist, welches im Zusammenwirken mit dem Schlitz (56) in einer zweiten Drehstellung (Fig. 5c) das Einsetzen des Gegenkupplungsstücks (28) in die Kupplungseinheit (16) gestattet und in einer ersten Drehstellung (Fig. 5e) das Rückziehen des Gegenkupplungsstücks (28) aus der Kupplungseinheit (16) verhindert.

22. Fahrzeug nach einem der Ansprüche 1 - 21,
dadurch gekennzeichnet,
daß die Kupplungseinheitführungsmittel (14) als ein Kupplungseinheitführungsgehäuse (14) ausgebildet sind, welches an einem ersten Ende offen ist.

23. Fahrzeug nach einem der Ansprüche 1 - 22,
dadurch gekennzeichnet,
daß die Kupplungseinheitführungsmittel (14) mit einem zweiten Ende an einem den Kabelführungskanal (12) bildenden Führungsrohr (10) befestigt sind.

24. Fahrzeug nach einem der Ansprüche 1 - 23,
dadurch gekennzeichnet,
daß die Kupplungseinheitführungsmittel (14) geradlinig an ein Endstück des Kabelführungskanals (12) anschließen.

25. Fahrzeug nach einem der Ansprüche 1 - 24,
dadurch gekennzeichnet,
daß der Kabelführungskanal (12) von einem an dem Fahrzeugrahmen befestigten Kabelführungsrohr (10) gebildet ist.

26. Fahrzeug nach einem der Ansprüche 1 - 24,
dadurch gekennzeichnet,
daß der Kabelführungskanal (12) von dem Innenraum eines tragenden Elements (10) eines Fahrzeugrahmens gebildet ist.

27. Kabelschloß für ein Fahrzeug, insbesondere für ein Zweirad-Fahrzeug, nach einem der Ansprüche 1 - 26, umfassend ein Schließkabel (18) mit einer auf ein Schließgeheimnis (70) reagierenden Kupplungseinheit (16) und ein in der Kupplungseinheit (16) verankerbares Gegenkupplungsstück (28),
wobei an der Kupplungseinheit (16) Verankerungsmittel (54) zum Verankern des Gegenkupplungsstücks (28) und Festlegemittel (30) zum Festlegen der Kupplungseinheit (16) an einem Fahrzeugrahmen (10) vorgesehen sind, wobei weiter die Verankerungsmittel (54) und die Festlegemittel (30) durch ein gemeinsames Schließgeheimnis (70) beeinflußbar sind,
wobei weiter in der Kupplungseinheit (16) ein bei Anwendung des Schließgeheimnisses (70) zwischen einer ersten Steuerstellung (Fig. 5a) und einer zweiten Steuerstellung (Fig. 5b verstellbares Steuerungselement (52) vorgesehen ist,
wobei weiter in der ersten Steuerstellung (Fig. 5a) des Steuerungselements (52) die Festlegemittel (30) festlegebereit sind und die Verankerungsmittel (54) entweder - bei eingesetztem Gegenkupplungsstück (28) (Fig. 5e) - dieses in der Kupplungseinheit (16) verankern können oder - bei nicht eingesetztem Gegenkupplungsstück (28) (Fig. 5a) - dessen Einführung in die Kupplungseinheit (16) verhindern können,
wobei weiter in der zweiten Steuerstellung (Fig. 5c) des Steuerungselements (52) die Festlegemittel (30) nicht festlegebereit sind und die Verankerungsmittel (54) eine Eintritts-Austrittsstellung für das Gegenkupplungsstück (28) einnehmen,
wobei weiter Rückstellmittel (80) vorgesehen sind, welche das Steuerungselement (52) in Richtung einer Rückstellung von der zweiten Steuerstellung (Fig. 5b) in die erste Steuerstellung (Fig. 5a) vorspannen,
wobei weiter Hemmittel (88) vorgesehen sind, welche bei nicht eingesetztem Gegenkupplungsstück (Fig. 5b) eine durch die Rückstellmittel (80) veranlaßte Rückkehr des Steuerungselements (52) aus der zweiten Steuerstellung (Fig. 5b) in die erste Steuerstellung (Fig. 5a) hemmen,
wobei weiter die Hemmwirkung der Hemmittel (88) bei Einführung des Gegenkupplungsstücks (28) in die Kupplungseinheit (16) lösbar ist mit der Folge, daß das Steuerungselement (52) aus der zweiten Steuerstellung (Fig. 5d) in die erste Steuerstellung (Fig. 5e) zurückspringt und damit die Verankerungsmittel (54) das Gegenkupplungsstück (28) in der Kupplungseinheit (16) verankern,
wobei weiter durch Verstellen des Steuerungselements (52) aus der ersten Steuerstellung (Fig. 5e) in die zweite Steuerstellung (Fig. 5d) entgegen der Wirkung der Rückstellmittel (80) die Verankerungsmittel (54) wieder in die Eintritts-Austrittsstellung (Fig. 5d) überführbar und die Hemmittel (88) wieder hemmungsaktivierbar (Fig. 5c) sind mit der Folge, daß das Gegenkupplungsstück (28) entnommen werden kann, hierbei aber das Steuerungselement (52) durch die Wirkung der Hemmittel (88) in der zweiten Steuerstellung (Fig. 5b) verbleibt, und
wobei das Steuerungselement (52) unter Überwindung der Hemmittel (88) aus der zweiten Steuerstellung (Fig. 5b) in die erste Steuerstellung (Fig. 5a) überführbar ist.

## Claims

1. A vehicle, in particular a two-wheel vehicle, with an associated cable lock,
wherein this cable lock has a lock cable (18) and in an end zone of the lock cable (18) a coupling unit (16) which reacts to a lock security means (70) and which serves to form a cable loop (62),
further wherein the lock cable (18) can be inserted with its end remote from the coupling unit (16) extending into a cable-guide duct (12) in the vehicle frame,
and wherein, with the lock cable (18) at least partly inserted into the cable-guide duct (12), the coupling unit (16) can be brought into securing engagement with coupling-unit securing means (44) on the vehicle frame in such a way that coupling-unit guide means (14) for the coupling unit (16) are provided on the vehicle frame (10), into which the coupling unit (16) can enter during the insertion of the lock cable (18) into the cable-guide duct (12), and in that the coupling-unit securing means (44) are provided in the vicinity of these coupling-unit guide means (14),
characterised in
that the coupling unit (16) can be released from securing engagement with the coupling-unit securing means (44) upon using the lock security means (70).

2. A vehicle according to Claim 1, characterised in that the coupling unit (16) can be secured to the coupling-unit securing means (44) by using the lock security means (70).

3. A vehicle according to Claims 1 and 2, characterised in that the coupling unit (16) can be secured to the coupling-unit securing means (44) by snap engagement when, upon insertion into the coupling-unit guide means (14), the coupling unit (16) reaches a predetermined position (Figure 1) with respect to the coupling-unit guide means (14).

4. A vehicle according to any one of Claims 1 to 3, characterised in that the coupling unit (16) has a lock element (3) which secures it in the coupling-unit guide means (14) by engagement with the coupling-unit securing means (44) and which can move relative to the coupling unit (16) substantially orthogonally to a guide axis (32) defined by the coupling-unit guide means (14).

5. A vehicle according to any one of Claims 1 to 4, characterised in that at least one predetermined relative angular insertion position of the coupling unit (16) with respect to the coupling-unit guide means (14) about a guide axis (32) defined by the coupling-unit guide means (14) is determined by an outer profile (16a) of the coupling unit (16) and by its coupling-unit guide means (14), and in that a lock element (30) of the coupling unit (16) and the coupling-unit securing means (44) are so located on the coupling unit (16) or on the coupling-unit guide means (14) that they can engage in this relative angular insertion position.

6. A vehicle according to any one of Claims 1 to 5, characterised in that the lock cable (18) is the carrier for a countercoupling member (28) which can be anchored on the coupling unit (16) when the coupling unit (16) is disengaged from the coupling-unit guide means (14).

7. A vehicle according to Claim 6, characterised in that the countercoupling member (28) is mounted at the end of the lock cable (18) which extends into the cable-guide duct (12) upon insertion of the lock cable (18).

8. A vehicle according to Claims 6 and 7, characterised in that the countercoupling member (28) can be anchored on and/or released from the coupling unit (16) upon entering a lock security means (70) into the coupling unit (16), which means also serves to disengage the coupling unit (16) from the coupling-unit securing means (44).

9. A vehicle according to any one of Claims 1 to 8, characterised in that the coupling unit (16) comprises a control element (52) which can be adjusted upon entering the lock security means (70) and which, on the one hand, can induce the transfer of a lock element (30) co-operating with the coupling-unit securing means (44) from a securing position securing the coupling unit (16) in the coupling-unit guide means (14) into a withdrawal position enabling the coupling unit (16) to be withdrawn from the coupling-unit guide means (14), and, on the other hand, can induce the anchoring of a countercoupling member (28) disposed on the lock cable (18) on the coupling unit and/or the release of this anchoring.

10. A vehicle according to any one of Claims 1 to 9, characterised in that mutually parallel guides (50,30) are provided in the coupling unit (16) for a lock element (30) co-operating with the coupling-unit securing means (44) and for a countercoupling member (28) mounted on the lock cable (18).

11. A vehicle according to Claim 10, characterised in that concentric guides (50,30) are provided inside the coupling unit (16) for the countercoupling member (28) and the lock element (30).

12. A vehicle according to Claim 11, characterised in that the lock element (30) is guided in a lock element guide (50) of the coupling unit (16) as a cup-shaped lock element (30) open towards an outer surface of the coupling unit (16), and in that the countercoupling member (28) can be inserted into an inner space of the cup-shaped lock element (30) and guided therein.

13. A vehicle according to Claim 12, characterised in that a control element (52) which is rotatable upon entering the lock security means (70) into the coupling unit (16) passes substantially diametrically through the cup-shaped lock element (30), in that cam means (78) for displacing the cup-shaped lock element (30) in the lock element guide (50) are provided in the vicinity of a least one passage slot (86) of a cup circumference on the rotatable control element (52), and in that anchoring means (54) for the counter-coupling member (28) are provided inside the cup circumference on the rotatable control element (52), which means, in an insert-outlet position (Figure 5c), enable the countercoupling member (28) to be inserted into the cup-shaped lock element (30), and in an anchoring position (Figure 5e) prevent the withdrawal of the counter-coupling member (28) from the cup-shaped lock element (30).

14. A vehicle according to Claim 13, characterised in that cup-shaped lock element (30) is preloaded by spring means (42) towards the securing position (Figure 5a), and in that the cup-shaped lock element (30) can be transferred by the cam means (78) into the withdrawal position (Figure 5b) counter to the action of the spring means (42)

15. A vehicle according to Claim 14, characterised in that the rotatable control element (52) can be rotated from a first rotational position (Figure 5a) counter to the action of torsion spring means (80) into a second rotational position (Figure 5b),
wherein in the first rotational position (Figure 5a) the cam means (78) release a transfer of the lock element (30) from the withdrawal position (5b) into the securing position (Figure 5a) induced by the spring means (42), and the anchoring means (54) assume the anchoring position,
further wherein in the second rotational position (Figure 5b) the cam means (78) prevent the transfer of the cup-shaped lock element (30) from the withdrawal position (Figure 5b) into the securing position (Figure 5a) and the anchoring means (54) assume the insert-outlet position (Figure 5b),
further wherein arresting means (88) are associated with the second rotational position (Figure 5b), which when the counter-coupling member (28) is withdrawn arrest the return of the rotatable control element (52) from the second rotational position (Figure 5b) into the first rotational position (5a), further wherein the arresting means (88) can be released by displacing the lock element by means of the countercoupling member (28) already inserted into the cup-shaped lock element (30) with the result that the rotatable control element (52) drops back under the action of the torsion spring means (80) into the first rotational position (Figure 5e), in which the countercoupling member (28) is anchored inside the cup-shaped lock element (30) by the anchoring means situated in the anchoring position,
further wherein for the purpose of releasing the anchoring of the countercoupling member (28) the rotatable control element (52) can be transferred from the first rotational position (5e) against the action of the torsion spring means (80) back into the second rotational position (5d) with the result that the arresting means (88) are rendered operative again (Figure 5c) by the action of the spring means (42), the rotatable control element (52) remains in the second rotational position (5c) and the countercoupling member (28) can leave the cup-shaped lock element (30), and
wherein, after the countercoupling member (Figure 5b) leaves the cup-shaped lock element (30), the rotary control element (52) can be shifted by a user back towards the first rotational position (Figure 5a) while overcoming the arresting means (88).

16. A vehicle according to Claims 14 and 15, characterised in that at one circumferential edge remote from the cup base the cup-shaped lock element (30) is formed with a helical tooth (34) which upon insertion of the coupling unit (16) into its coupling-unit guide means (14) brings about, by co-operation with these latter, displacement of the cup-shaped lock element (30) towards its withdrawal position against the action of the spring means (42) with the result that the cup-shaped lock element (30) drops back into its securing position (Figure 5a) under the action of the spring means (42) as soon as the cup-shaped lock element (30) enters the region of the coupling-unit securing means (44) during the insertion of the coupling unit (16) into the coupling-unit guide means (14).

17. A vehicle according to any one of Claims 1 to 16, characterised in that the coupling-unit securing means (44) are formed by a depression or a recess in a coupling-unit guide housing (14) forming the coupling-unit guide means (14).

18. A vehicle according to any one of Claims 1 to 17, characterised in that the coupling unit (16) comprises a key-operated lock cylinder (64).

19. A vehicle according to Claim 18, characterised in that a lock cylinder core (72) of the lock cylinder (64), which can be turned by a key (70), is connected with a rotatable control element (52) for joint rotation, wherein this rotatable control element (52) is intended to act on a lock element (30) of the coupling unit (16), which co-operates with the coupling-unit securing means (44) and which is further intended to anchor inside the coupling unit (16) a countercoupling member (28) connected with the lock cable (18).

20. A vehicle according to any one of Claims 1 to 18, characterised in that the coupling unit (16) is formed with a digit setting mechanism.

21. A vehicle according to any one of Claims 1 to 20, characterised in that a countercoupling member (28) mounted on the lock cable (18) is formed with an undercut slot (56) which is open towards the forward end of the countercoupling member (28) upon insertion of the countercoupling member (28) into the coupling unit (16), and in that in the coupling unit (16) a control element (52) is provided which is rotatable upon entering a lock security means and which in co-operation with the slot (56) in a second rotational position (Figure 5c) enables the countercoupling member (28) to be inserted into the coupling unit (16) and in a first rotational position (Figure 5e) prevents the withdrawal of the countercoupling member (28) from the coupling unit (16).

22. A vehicle according to any one of Claims 1 to 21, characterised in that the coupling-unit guide means (14) is in the form of a coupling-unit guide housing (14) which is open at a first end.

23. A vehicle according to any one of Claims 1 to 22, characterised in that the coupling-unit guide means (14) are fastened at a second end to a guide tube (10) forming the cable-guide duct (12).

24. A vehicle according to any one of Claims 1 to 23, characterised in that the coupling-unit guide means (14) adjoin in a straight line an end piece of the cable-guide duct (12).

25. A vehicle according to any one of Claims 1 to 24, characterised in that the cable-guide duct (12) is formed by a cable-guide tube (10) fastened to the vehicle frame.

26. A vehicle according to any one of Claims 1 to 24, characterised in that the cable-guide duct (12) is formed by the interior of a supporting element (10) of a vehicle frame.

27. A cable lock for a vehicle, in particular for a two-wheel vehicle, according to any one of Claims 1 to 26, comprising a lock cable (18) with a coupling unit (16) which reacts to a lock security means (70) and a countercoupling member (28) which can be anchored in the coupling unit (16), wherein anchoring means (54) for anchoring the countercoupling member (28) are provided on the coupling unit (16) and locating means (30) to locate the coupling unit (16) are provided on a vehicle frame (10), further wherein the anchoring means (54) and the locating means (30) can be influenced by a common lock security means (70), further wherein in the coupling unit (16) a control element (52) is provided which is adjustable, upon using the lock security means (70), between a first control position (Figure 5a) and a second control position (Figure 5b), further wherein in the first control position (Figure 5a) of the control element (52) the locating means (30) are ready for location and the anchoring means (54), if the countercoupling member (28) is inserted (Figure 5e), can either anchor the latter in the coupling unit (16) or, if the countercoupling member (28) is not inserted (Figure 5a), can prevent its insertion into the coupling unit (16), further wherein in the second control position (Figure 5c) of the control element (52) the locating means (30) are not ready for location and the anchoring means (54) assume an entry-outlet position for the countercoupling member (28), further wherein resetting means (80) are provided which preload the control element (52) towards a resetting position from the second control position (Figure 5b) into the first control position (Figure 5a), further wherein arresting means (88) are provided which , if the countercoupling member (28) is not inserted (Figure 5b), arrest return of the control element (52) induced by the resetting means (80) from the second control position (Figure 5b) into the first control position (Figure 5a), further wherein the arresting action of the arresting means (88) can be released upon insertion of the countercoupling member (28) into the coupling unit (16) with the result that the control element (52) springs back from the second control position (Figure 5d) into the first control position (Figure 5e) and thus the anchoring means (54) anchor the countercoupling member (28) in the coupling unit (16), further wherein by shifting the control element (52) from the first control position (Figure 5e) into the second control position (Figure 5d) against the action of the resetting means (80) the anchoring means (54) can be transferred again into the entry-outlet position (Figure 5d) and the arresting means (88) can again be arrest-activated (Figure 5c) with the result that the countercoupling member (28) can be withdrawn but in this case the control element (52) remains in the second control position (Figure 5b) because of the action of the arresting means (88), and wherein the control element (52) can be transferred from the second control position (Figure 5b) into the first control position (Figure 5a) while overcoming the arresting means (88).

## Revendications

1. Véhicule, notamment véhicule à deux roues, comportant une serrure de câble correspondante,
cette serrure de câble comportant un câble de fermeture (18) et, dans une partie d'extrémité du câble de fermeture (18), une unité d'accouplement (16) réagissant à un code secret de fermeture (70) et qui sert à former une boucle de câble (62),
le câble de fermeture (18) pouvant être encastré en outre, avec en premier son extrémité éloignée de l'unité d'accouplement (16), dans un conduit de guidage de câble (12) sur le cadre du véhicule
et l'unité d'accouplement (16) pouvant être amenée en engagement de sûreté avec des moyens de sûreté (44) de l'unité d'accouplement sur le cadre du véhicule, alors que le câble de fermeture (18) est au moins partiellement encastré dans le conduit de guidage de câble (12),
en ce que sur le cadre (10) du véhicule sont prévus des moyens de guidage (14) de l'unité d'accouplement (16) dans lesquels l'unité d'accouplement (16) peut pénétrer, au cours de l'introduction du câble de fermeture (18) dans le conduit de guidage de câble (12), et en ce que les moyens de sûreté (44) de l'unité d'accouplement sont montés dans la région de ces moyens de guidage (14) de l'unité d'accouplement,
caractérisé
en ce que l'unité d'accouplement (16) peut être désengagée des moyens de sûreté (44) de l'unité d'accouplement, lorsqu'on applique le code secret de fermeture (70).

2. Véhicule selon la revendication 1,
caractérisé
en ce que l'unité d'accouplement (16) peut être assurée sur les moyens de sûreté (44) de l'unité d'accouplement par utilisation du code secret de fermeture (70).

3. Véhicule selon l'une des revendications 1 et 2,
caractérisé
en ce que l'unité d'accouplement (16) peut être assurée sur les moyens de sûreté (44) de l'unité d'accouplement par engagement par encliquetage, lorsque l'unité d'accouplement (16), qui est introduite dans les moyens de guidage (14) de l'unité d'accouplement, atteint une position prédéterminée (fig. 1) par rapport aux moyens de guidage (14) de l'unité d'accouplement.

4. Véhicule selon l'une des revendications 1 à 3,
caractérisé
en ce que l'unité d'accouplement (16) comporte un élément à verrou (30) la bloquant dans les moyens de guidage (14) de l'unité d'accouplement, par engagement avec les moyens de sûreté (44) de l'unité d'accouplement, lequel élément à verrou est déplacable par rapport à l'unité d'accouplement (16), sensiblement perpendiculairement à un axe de guidage (32) déterminé par les moyens de guidage de l'unité d'accouplement.

5. Véhicule selon l'une des revendications 1 à 4,
caractérisé
en ce que par un profil extérieur (16a) de l'unité d'accouplement (16) et par ses moyens de guidage (14) est définie au moins une position angulaire d'introduction relative et prédéterminée de l'unité d'accouplement (16) par rapport à ses moyens de guidage (14) autour d'un axe de guidage (32) défini par les moyens de guidage (14) de l'unité d'accouplement et en ce qu'un élément à verrou (30) de l'unité d'accouplement (16) et les moyens de sûreté (44) de l'unité d'accouplement sont localisés respectivement sur l'unité d'accouplement (16) et sur les moyens de guidage (14) de l'unité d'accouplement, de manière qu'ils puissent parvenir en prise entre eux dans cette position angulaire relative d'introduction.

6. Véhicule selon l'une des revendications 1 à 5,
caractérisé
en ce que le câble de fermeture (18) est un support d'une contre-pièce d'accouplement (28), qui peut être ancrée à l'unité d'accouplement (16), lorsque l'unité d'accouplement (16) est désengagée des moyens de guidage (14) de l'unité d'accouplement.

7. Véhicule selon la revendication 6,
caractérisé
en ce que la contre-pièce d'accouplement (28) est montée sur l'extrémité du câble de fermeture (18), se trouvant à l'avant lors de l'introduction du câble de fermeture (18) dans le conduit de guidage de câble (12).

8. Véhicule selon l'une des revendications 6 et 7,
caractérisé
en ce que la contre-pièce d'accouplement (28) peut être ancrée sur l'unité d'accouplement (16) ou/et désolidarisée de celle-ci par introduction d'un code secret de fermeture (70) dans l'unité d'accouplement (16), lequel code secret sert aussi à désengager l'unité d'accouplement (16) de ses moyens de sûreté (44).

9. Véhicule selon l'une des revendications 1 à 8,
caractérisé
en ce que l'unité d'accouplement (16) comprend un élément de commande (52) déplaçable par introduction du code secret de fermeture (70), lequel élément de commande peut provoquer d'une part le passage d'un élément à verrou (30), coopérant avec les moyens de sûreté (44) de l'unité d'accouplement, d'une position de sûreté bloquant l'unité d'accouplement (16) dans ses moyens de guidage (14), dans une position de retrait, autorisant le retrait de l'unité d'accouplement (16) de ses moyens de guidage (14) et qui peut provoquer d'autre part l'ancrage d'une contre-pièce d'accouplement (28), disposée sur le câble de fermeture (18), à l'unité d'accouplement et/ou la suppression de cet ancrage.

10. Véhicule selon l'une des revendications 1 à 9,
caractérisé
en ce que des guidages (50, 30) parallèles entre eux sont prévus dans l'unité d'accouplement (16) pour un élément à verrou (30) de l'unité d'accouplement (16), coopérant avec les moyens de sûreté (44) de l'unité d'accouplement et pour une contre-pièce d'accouplement (28) montée sur le câble de fermeture (18).

11. Véhicule selon la revendication 10,
caractérisé
en ce que des guidages concentriques (50, 30) sont prévus à l'intérieur de l'unité d'accouplement (16) pour la contre-pièce d'accouplement (28) et l'élément à verrou (30).

12. Véhicule selon la revendication 11,
caractérisé
en ce que l'élément à verrou (30) est guidé, sous la forme d'un élément à verrou (30) en forme de pot, ouvert vers une surface extérieure de l'unité d'accouplement (16), dans un guidage d'élément à verrou (50) de l'unité d'accouplement (16) et en ce que la contre-pièce d'accouplement (28) peut être insérée dans un espace intérieur de l'élément à verrou (30) en forme de pot et peut être guidée à l'intérieur de celui-ci.

13. Véhicule selon la revendication 12,
caractérisé
en ce qu'un élément de commande (52) tournant lorsqu'est introduit le code secret de fermeture (70) dans l'unité d'accouplement (16), traverse sensiblement diamétralement l'élément à verrou (30) en forme de pot, en ce que dans la région d'au moins une fente de passage (86) d'une enveloppe en pot des moyens à came (78) sont prévus sur l'élément de commande (52) tournant, pour faire coulisser l'élément à verrou (30) en forme de pot dans le guidage d'élément à verrou (50) et en ce qu'à l'intérieur de l'enveloppe en pot des moyens d'ancrage (54) sont prévus sur l'élément de commande (52) tournant pour la contre-pièce d'accouplement (28) lesquels autorisent dans une position de sortie et d'introduction (fig. 5c), l'introduction de la contre-pièce d'accouplement (28) dans l'élément à verrou (30) en forme de pot et qui dans une position d'ancrage (fig. 5e) empêche le retrait de la contre-pièce d'accouplement (28) à l'extérieur de l'élément à verrou (30) en forme de pot.

14. Véhicule selon la revendication 13,
caractérisé
en ce que l'élément à verrou (30) en forme de pot est précontraint par des moyens élastiques (42) en direction de la position de sûreté (fig. 5a) et en ce que l'élément à verrou (30) en forme de pot peut être transféré dans la position de prélèvement (fig. 5b), par les moyens à came (78), dans le sens contraire au sens d'action des moyens élastiques (42).

15. Véhicule selon la revendication 14,
caractérisé
en ce que l'élément de commande (52) tournant peut tourner d'une première position de rotation (fig. 5a), à l'encontre de l'effet de moyens élastiques de torsion (80), dans une deuxième position de rotation (fig. 5b),
dans la première position (fig. 5a) les moyens à came (78) autorisant un passage, provoqué par les moyens élastiques (42), de l'élément à verrou (30) de la position de prélèvement (fig. 5b) à la position de sûreté (fig. 5a), et les moyens d'ancrage (54) prenant la position d'ancrage,
en outre dans la deuxième position de rotation (fig. 5b), les moyens à came (78) empêchant le passage de l'élément à verrou (30) en forme de pot de la position de prélèvement (fig. 5b) à la position de sûreté (fig. 5a) et les moyens d'ancrage (54) prenant la position de sortie d'introduction (fig. 5b),
en outre des moyens de blocage (88) qui bloquent le retour de l'élément de commande (52) tournant de la deuxième position de rotation (fig. 5b) à la première position de rotation (fig. 5a), lorsque la contre-pièce d'accouplement (28) est enlevée, étant associés à la deuxième position de rotation (fig. 5b),
en outre les moyens de blocage (88) pouvant être supprimés par déplacement de l'élément à verrou, au moyen de la contre-pièce d'accouplement (28) déjà introduite dans l'élément à verrou (30) en forme de pot, avec pour conséquence que l'élément de commande (52) tournant retombe, sous l'effet des moyens élastiques de torsion (80), dans la première position de rotation (fig. 5e), dans laquelle la contre-pièce d'accouplement (28) est ancrée à l'intérieur de l'élément à verrou (30) en forme de pot, par les moyens d'ancrage (54) se trouvant alors en position d'ancrage,
en outre afin de supprimer l'ancrage de la contre-pièce d'accouplement (28), l'élément de commande (52) tournant peut être replacé de la première position de rotation (fig. 5e) à nouveau dans la deuxième position de rotation (fig. 5d), à l'encontre de l'effet des moyens élastiques de torsion (80), avec pour conséquence que les moyens de blocage (88) deviennent à nouveau opérants (fig. 5c), sous l'effet des moyens élastiques (42), l'élément de commande (52) tournant s'arrête dans la deuxième position de rotation (fig. 5c) et la contre-pièce d'accouplement (28) peut sortir de l'élément à verrou (30) en forme de pot et
l'élément de commande tournant (52) pouvant être déplacé à nouveau en direction de la première position de rotation (fig. 5a), après sortie de la contre-pièce d'accouplement (fig. 5b) de l'élément à verrou (30) en forme de pot, par un utilisateur et en surmontant les moyens de blocage (88).

16. Véhicule selon l'une des revendications 14 et 15,
caractérisé
en ce que l'élément à verrou (30) en forme de pot est réalisé sur un bord d'enveloppe éloigné du fond en pot, avec une dent oblique (34) qui, lors de l'introduction de l'unité d'accouplement (16) dans ses moyens de guidage (14), provoque, par coopération avec ces derniers, un coulissement de l'élément à verrou (30) en forme de pot en direction de sa position de prélèvement, à l'encontre de l'effet des moyens élastiques (42) avec pour conséquence que l'élément à verrou (30) en forme de pot retombe dans sa position (fig. 5a) sous l'effet des moyens élastiques (42), dès qu'au cours de l'introduction de l'unité d'accouplement (16) dans ses moyens de guidage (14), l'élément à verrou (30) en forme de pot parvient dans la région des moyens de sûreté (44) de l'unité d'accouplement.

17. Véhicule selon l'une des revendications 1 à 16,
caractérisé
en ce que les moyens de sûreté (44) de l'unité d'accouplement sont formés par un renfoncement ou un évidement dans un boîtier de guidage (14) de l'unité d'accouplement formant les moyens de guidage (14) de l'unité d'accouplement.

18. Véhicule selon l'une des revendications 1 à 17,
caractérisé
en ce que l'unité d'accouplement (16) comprend un cylindre de fermeture (64) actionné au moyen d'une clé.

19. Véhicule selon la revendication 18,
caractérisé
en ce qu'un noyau (72) du cylindre de fermeture (64), pouvant tourner au moyen d'une clé (70), est relié à un élément de commande (52) tournant en vue de leur rotation commune, cet élément de commande tournant (52) étant destiné à agir sur un élément à verrou (30) de l'unité d'accouplement (16), lequel coopère avec les moyens de sûreté (44) de l'unité d'accouplement et est en outre destiné à ancrer une contre-pièce d'accouplement (28), reliée au câble de fermeture (18), à l'intérieur de l'unité d'accouplement (16).

20. Véhicule selon l'une des revendications 1 à 18,
caractérisé
en ce que l'unité d'accouplement (16) est réalisée avec un mécanisme de sélection de chiffres.

21. Véhicule selon l'une des revendications 1 à 20,
caractérisé
en ce qu'une contre-pièce d'accouplement (28), montée sur le câble de fermeture (18), présente une fente (56) détalonnée et ouverte vers l'extrémité avant de la contre-pièce d'accouplement (28), lors de l'introduction de la contre-pièce d'accouplement (28) dans l'unité d'accouplement (16) et en ce que dans l'unité d'accouplement (16) est prévu un élément de commande (52) pouvant tourner par introduction d'un code secret de fermeture, lequel autorise, en coopération avec la fente (56), dans une deuxième position de rotation (fig. 5c), l'introduction de la contre-pièce d'accouplement (28) dans l'unité d'accouplement (16), et empêche, dans une première position de rotation (fig. 5e), le retrait de la contre-pièce d'accouplement (28) de l'unité d'accouplement (16).

22. Véhicule selon l'une des revendications 1 à 21,
caractérisé
en ce que les moyens de guidage (14) de l'unité d'accouplement sont réalisés sous la forme d'un boîtier de guidage de l'unité d'accouplement, qui est ouvert à une première extrémité.

23. Véhicule selon l'une des revendications 1 à 22,
caractérisé
en ce que les moyens de guidage (14) de l'unité d'accouplement sont fixés par une deuxième extrémité à un tube de guidage (10) formant le conduit de guidage de câble (12).

24. Véhicule selon l'une des revendications 1 à 23,
caractérisé
en ce que les moyens de guidage (14) de l'unité d'accouplement se raccordent en ligne droite à un embout du conduit de guidage de câble (12).

25. Véhicule selon l'une des revendications 1 à 24,
caractérisé
en ce que le conduit de guidage de câble (12) est formé par un tube de guidage de câble (10) fixé au cadre du véhicule.

26. Véhicule selon l'une des revendications 1 à 24,
caractérisé
en ce que le conduit de guidage de câble (12) est formé par le volume intérieur d'un élément portant (10) d'un cadre du véhicule.

27. Serrure de câble pour un véhicule, notamment pour un véhicule à deux roues, selon l'une des revendications 1 à 26, comportant un câble de fermeture (18) avec une unité d'accouplement (16) réagissant à un code secret de fermeture (70) ainsi qu'une contre-pièce d'accouplement (28), pouvant être ancrée dans l'unité d'accouplement (16),
des moyens d'ancrage (54) étant prévus sur l'unité d'accouplement (16) pour l'ancrage de la contre-pièce d'accouplement (28) et des moyens de fixation (30) étant prévus sur un cadre (10) du véhicule pour la fixation de l'unité d'accouplement (16),
en outre les moyens d'ancrage (54) et les moyens de fixation (34) pouvant être influencés par un code secret de fermeture (70) commun,
en outre dans l'unité d'accouplement (16) étant prévu un élément de commande (52) déplaçable, à l'application du code secret de fermeture (70), entre une première position de commande (fig. 5a) et une deuxième position de commande (fig. 5b),
en outre dans la première position de commande (fig. 5a) de l'élément de commande (52), les moyens de fixation (30) étant prêts à la fixation et les moyens d'ancrage (54) pouvant soit - lorsque la contre-pièce d'accouplement (28) est insérée (fig. 5e) - ancrer celle-ci dans l'unité d'accouplement (16), soit - lorsque la contre-pièce d'accouplement (28) n'est pas insérée (fig. 5a) - empêcher son introduction dans l'unité d'accouplement,
en outre dans la deuxième position de commande (fig. 5c) de l'élément de commande (52), les moyens de fixation (30) n'étant pas prêts à la fixation et les moyens d'ancrage (54) prenant une ouverture d'entrée-sortie pour la contre-pièce d'accouplement (28),
en outre des moyens de rappel (80) étant prévus, qui précontraignent l'élément de commande (52) en direction d'un rappel de la deuxième position de commande (fig. 5b) dans la première position de commande (fig. 5a),
en outre des moyens de blocage (88) étant prévus qui, lorsque la contre-pièce d'accouplement n'est pas insérée (fig. 5b), bloquent un rappel, provoqué par les moyens de rappel (80), de l'élément de commande (52) de la deuxième position de commande (fig. 5b) dans la première position de commande (fig. 5a),
en outre l'effet de blocage des moyens de blocage (88) pouvant être supprimé à l'introduction de la contre-pièce d'accouplement (28) dans l'unité d'accouplement (16), avec pour conséquence que l'élément de commande (52) repasse brusquement de la deuxième position de commande (fig. 5d) dans la première position de commande (fig. 5e), et que par là les moyens d'ancrage (54) ancrent la contre-pièce d'accouplement (28) dans l'unité d'accouplement (16),
en outre par déplacement de l'élément de commande (52) de la première position de commande (fig. 5e) dans la deuxième position de commande (fig. 5d), à l'encontre de l'effet des moyens de rappel (80), les moyens d'ancrage (54) pouvant repasser dans la position d'entrée-sortie (fig. 5d) et les moyens de blocage (88) pouvant à nouveau être activés en blocage (fig. 5c) avec pour conséquence que la contre-pièce d'accouplement (28) peut être enlevée mais que ce faisant l'élément de commande (52) reste dans la deuxième position de commande (fig. 5b) sous l'effet des moyens de blocage (88), et
l'élément de commande (52) pouvant passer de la deuxième position de commande (fig. 5b) dans la première position de commande (fig. 5a) en surmontant les moyens de blocage (88).
